(19) Europäisches Patentamt European Patent Office Office européen des brevets

(11) **EP 4 487 190 B1**

(12) **EUROPEAN PATENT SPECIFICATION**

(45) Date of publication and mention
of the grant of the patent:
**17.09.2025 Bulletin 2025/38**

(21) Application number: **24724273.8**

(22) Date of filing: **09.05.2024**

(51) International Patent Classification (IPC):
**G05B 23/02** *(2006.01)*

(52) Cooperative Patent Classification (CPC):
**G05B 23/0254; G05B 23/0294**

(86) International application number:
**PCT/EP2024/062888**

(87) International publication number:
**WO 2024/231526 (14.11.2024 Gazette 2024/46)**

(54) **INDUSTRIAL SYSTEM**

INDUSTRIESYSTEM

SYSTÈME INDUSTRIEL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.05.2023 EP 23172852**

(43) Date of publication of application:
**08.01.2025 Bulletin 2025/02**

(73) Proprietor: **GEA Group AG
40468 Düsseldorf (DE)**

(72) Inventors:
• **YAZDI, Hassan
2860 Søborg (DK)**
• **FELDMANN, Kevin
2860 Søborg (DK)**
• **THEISEN, Lukas Roy Svane
2860 Søborg (DK)**

(74) Representative: **Strange, Harry George
Withers & Rogers LLP
2 London Bridge
London, Greater London SE1 9RA (GB)**

(56) References cited:
**EP-B1- 3 223 092        WO-A1-2013/127996
US-A1- 2020 126 167     US-A1- 2020 150 634
US-B2- 10 752 845**

**Description**

**TECHNICAL FIELD**

The present disclosure relates to assisted industrial system operation. Particularly, but not exclusively, the present disclosure relates to providing operation assistance to an operator of an industrial system. Particularly but not exclusively, the present disclosure relates to determining actions to improve operation of an industrial system based on an assessed effect of a detected deviation in data associated with the industrial system.

**BACKGROUND**

Process operators in the food and beverage industry have traditionally been equipped with classical SCADA systems (supervisory control and data acquisition systems) to operate an industrial system such as a processing plant. These systems have very detailed overviews of the plants, with hundreds of sensor values, actuators, and alarms. Local controllers and sequence handling systems at a database level, e.g. programmable logic control (PLC) unit systems, handle basic operations of the process. The operator role is therefore limited to acting reactively to the local events/alarms, or operators otherwise rely on the PLC systems to perform the assigned tasks.

The challenge with the above is that the PLC systems are often programmed to a fixed set of parameters regardless of the process variation and upstream variations, e.g. raw material quality and/or quantity, seasonal changes in surrounding conditions, and changes in utility supply to the process. While the SCADA system indicates these variations, the complexity of information provided to operators are beyond human ability to digest. Correlations and impact analysis are often missed and operators are unable to take up-to-date corrective actions to optimize the operation for productivity, quality, and sustainability of the production, all in real-time. A decision supporting system is applied to an industrial system, such as a plant directed to the food and beverage industry, e.g. brewery or liquid dairy processes, to aid operators in performing such real-time optimization operations.

The present disclosure is directed towards collecting various type of data from various sections of the process, monitor the development of key performance indicators, predict the future development, evaluate the impact of deviations, form a conclusive set of information to the operator, and suggest corrective actions.

US 2020/150634 A1 describes approaches which attempt to improve operations of a control system that monitors and controls the operation of one or more components of an industrial process.

US 2020/126167 A1 describes a programmable manufacturing advisor that automatically presents recommended actions for achieving a desired productivity improvement for a manufacturing process to an operations manager.

**SUMMARY OF THE INVENTION**

The disclosure is directed towards methods for predicting a future state of an industrial system and providing operation recommendations for changing one or more processes of the industrial system.

The present invention relates to a computer-implemented method according to claim 1 for determining actions to improve operation of an industrial system. The method comprises obtaining reference data indicative of one or more states of the industrial system, wherein reference data is associated with data collected from one or more sensors of the industrial system. It is determined whether a deviation greater than a predetermined threshold is present within the reference data, wherein the predetermined threshold is associated with a process of the industrial system. In the event that a deviation greater than the predetermined threshold is present, the effect of the deviation on one or more outputs of the industrial system is assessed based on a difference between a performance of the industrial system with the deviation present at a first time point and a projected performance of the industrial system at the first time point without the deviation present. The method further comprises selecting one or more mitigating control actions from a plurality of predetermined control actions, wherein each predetermined control actions represents a predetermined operation to change one or more processes of the industrial system, and wherein selecting comprises identification of an issue and associated control action. The issue is identified from a plurality of predetermined issues as causing the deviation based on the assessed effect of the deviation. Based on the identified issue causing the deviation, one or more control actions from the plurality of predetermined control actions is identified, wherein the one or more identified control actions are selected to reduce the effect of the deviation of the one or more outputs of the industrial system. Subsequently, an impact of performing each mitigating control action on the one or more outputs of the industrial system is calculated and a representation of the impact of performing one or more mitigating control actions is output to a user interface. The representation enables a user of the user interface to select an operation to initiate one or more mitigating control actions to change one or more processes of the industrial system. Beneficially, the complex information associated with the industrial system is refined to the most information relevant to production operation. The efficiency of the industrial system is increased as decision-making of operators is improved due to targeted communication of relevant consolidated data. Subsequently, a user of the user interface, such as an operator of the industrial system, can quickly understand key current or upcoming impacts to the one or more processes of the industrial system. The operator can more accurately and reliably decide whether to perform a recommended corrective action to optimize the process of the industrial system based on up-to-date information on the processes of the industrial system. Such a process allows for small inefficiencies to be detected and rectified, or otherwise overcome, at an earlier stage than is otherwise possible, potentially before larger inefficiencies can occur.

Another aspect of the present disclosure, which does not belong to the scope of the claimed invention, relates to a computer-implemented method for predicting system performance of an industrial system. The method comprises obtaining a first state value of the system from a trained machine learning model, wherein: the trained machine learning model predicts, based on a performance of the industrial system over a first time period, the performance of the industrial system over a second time period, wherein the performance of the industrial system over the first time period is determined using data collected at the first time period from a set of sensors of the industrial system; and the first state value of the system is associated with the predicted performance of the industrial system over the second time period and is indicative of a future state of the industrial system. Real-time system information is also obtained, wherein the real-time system information is indicative of a current state of the industrial system and comprises data collected by the set of sensors of the industrial system. Using a prediction model configured to predict the performance of the industrial system at the second time period based on the real-time system information and the first state value of the system, a second state value is determined. The method further comprises calculating a third state value of the system using data collected from the set of sensors of the industrial system during the second time period, wherein the third state value of the system is associated with the performance of the industrial system at the second time period and is indicative of a state of the industrial system at the second time period. The trained machine learning model is subsequently adjusted to reduce the difference between the second state value determined by the prediction model and the third state value of the system.

Beneficially, the process utilizes a combination of a trained machine learning model and a prediction model results to produce an initial prediction. The initial prediction is subsequently modified to take into account real-time data associated with the prediction. Additionally, the trained machine learning is kept up-to-date by the inclusion of a continuous learning loop, such that subsequent predictions are therefore increasingly accurate and reliable. Furthermore, the inclusion of the prediction model allows for real-time variabilities associated with relevant processes to be incorporated into the prediction, such that the prediction more closely matches the state of the industrial system at the predicted time point. These predictions can then be used by an operator, or optimization systems, of the industrial system to determine operations to increase or maintain the efficiency of the industrial system, potentially before inefficiencies impact the processes of the industrial system.

Another aspect of the present disclosure, which does not belong to the scope of the claimed invention, relates to a computer-implemented method for automated monitoring of an industrial system and subsequent generation of operation recommendations for one or more processes of the industrial system. The method comprises obtaining a first state value from a trained machine learning model, wherein: the trained machine learning model predicts, based on a performance of the industrial system over a first time period, the performance of the industrial system over a second time period, wherein the performance of the industrial system over the first time period is determined using data collected at the first time period from a set of sensors of the industrial system; and the first state value of the system is associated with the predicted performance of the industrial system over the second time period and is indicative of a future state of the industrial system. Real-time system information, wherein the real-time system information is indicative of a current state of the industrial system and comprises data collected by the set of sensors of the industrial system, is also obtained. A second state value of the system is then determined using a prediction model configured to predict the performance of the industrial system at the second time period based on the first state value of the system and the real-time system information.

Using the second state value, it is determined whether a deviation greater than a predetermined threshold is present in the predicted performance of the industrial system at the second time period, wherein the predetermined threshold is associated with a process of the industrial system. In the event that a deviation greater than the predetermined threshold is present, the method comprises assessing the effect of the deviation on one or more outputs of the industrial system based on a difference between the predicted performance of the industrial system at the second time period and a projected performance of the industrial system without the deviation present. One or more mitigating control actions is selected from a plurality of predetermined control actions, wherein each predetermined control actions represents a predetermined operation to change one or more processes of the industrial system. Selecting comprises: assessing a difference between the real-time performance of the industrial system and the performance of the industrial system over the first time period; determining an issue from a plurality of predetermined issues causing the deviation based on the assessed difference; and identifying one or more control actions from the plurality of predetermined control actions based on the issue causing the deviation, wherein the one or more identified control actions mitigate the difference between the predicted performance of the industrial system at the second time period and the real-time performance of the industrial system.

The one or more mitigating control actions are prioritized based on calculating an impact of performing each mitigating control action on the industrial system. Additionally, a representation of the impact of performing one or more mitigating control actions is outputted to a user interface, enabling a user, via the user interface, to select an operation to initiate one or more mitigating control actions to change one or more processes of the industrial system.

In this embodiment predicted states of the industrial system are used to determine operations to increase or maintain the efficiency of the industrial system. Deviations in prediction data that are potentially undetectable by human operators can be used to identify current or upcoming issues with the industrial system. Such issues may affect, or impact, the performance of the industrial system. The impact calculations provide the operator with relevant information to enable the operator to determine whether to perform recommended actions to overcome an upcoming issue. Such automated monitoring and operation support can result in a highly efficient industrial system, which is optimized based on real-time variations and the potential consequences of trend deviation.

Additional aspects and embodiments of the present systems are disclosed, and the above aspects and embodiments should not be construed as limiting the present disclosure.

## BRIEF DESCRIPTION OF DRAWINGS

To facilitate a fuller understanding of the present disclosure, reference is now made to the accompanying drawings, in which like elements are referenced with like numerals. These drawings should not be construed as limiting the present disclosure, but are intended to be illustrative only.

Figure 1 shows a flowchart illustrating a method for determining actions to improve operation of an industrial system.

Figure 2 shows a high-level system architecture diagram in accordance with the present disclosure for determining actions to improve operation of an industrial system.

Figure 3 shows an example representation of an impact of an issue on the performance of an industrial system on a user interface of the industrial system.

Figure 4 shows a flowchart illustrating a method for selecting one or more mitigating control actions based on an impact on performance of an industrial system.

Figure 5 shows a flowchart illustrating a method for improving the selection of one or more mitigating control actions based on feedback data.

Figure 6 shows a flowchart illustrating a method for predicting system performance of an industrial system.

Figure 7 shows a high-level system architecture diagram in accordance with the present disclosure for predicting system performance of an industrial system.

Figure 8 shows a flowchart illustrating a method for updating a trained machine learning model configured to predict performance of an industrial system based on data collected from a set of sensors of the industrial system.

Figure 9 shows a flowchart illustrating a method for using quality labelling in updating a trained machine learning model configured to predict performance of the industrial system.

Figures 10A-10B show a flowchart illustrating a method for automated monitoring of an industrial system and generation of operation recommendations for the industrial system.

Figure 11 shows a high-level system architecture diagram in accordance with the present disclosure for automated monitoring of an industrial system and generation of operation recommendation for the industrial system.

Figure 12 shows an example computing system for operating, alone or in combination, any of the methods disclosed herein.

## DETAILED DESCRIPTION

In the present disclosure, references to items in the singular should be understood to include items in the plural, and vice versa, unless explicitly stated otherwise or clear from the context. Grammatical conjunctions are intended to express any and all disjunctive and conjunctive combinations of conjoined clauses, sentences, words, and the like, unless otherwise stated or clear from the context. Thus, the term "or" should generally be understood to mean "and/or" and so forth. The use of all examples, or exemplary language ("e.g.," "such as," "including," or the like) provided herein, is intended merely to better illuminate the embodiments, and does not pose a limitation on the scope of the embodiments or the claims.

The skilled person will appreciate that the systems and methods of the present disclosure are not limited to a single programming language or paradigm. Indeed, the systems and methods of the present disclosure are applicable to any suitable programming language or environment, including but not limited to Java, C, C++, any suitable assembly language, Python, C#, a script language code e.g., JavaScript, Ruby, PHP, and the like.

Some embodiments described herein may relate to a computer storage product with a transitory, or non-transitory, computer-readable medium (also can be referred to as a transitory, or non-transitory, processor-readable medium) having instructions or computer code thereon for performing various computer implemented operations. The computer-readable medium (or processor readable medium) is non transitory in the sense that it does not include transitory propagating signals per se (e.g., a propagating electromagnetic wave carrying information on a transmission medium such as space or a cable). The media and computer code (also can be referred to as code) is those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a transitory computer program product, which can include, for example, the instructions and/or computer code discussed herein.

Some embodiments and/or methods described herein can be performed by software (executed on hardware), hardware, or a combination thereof. Hardware modules include, for example, a general-purpose processor, a field programmable gate array (FPGA), and/or an application specific integrated circuit (ASIC). Software modules (executed on hardware) can be expressed in a variety of software languages (e.g., computer code), including C, C++, Java, Ruby, Visual Basic, Python, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments can be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

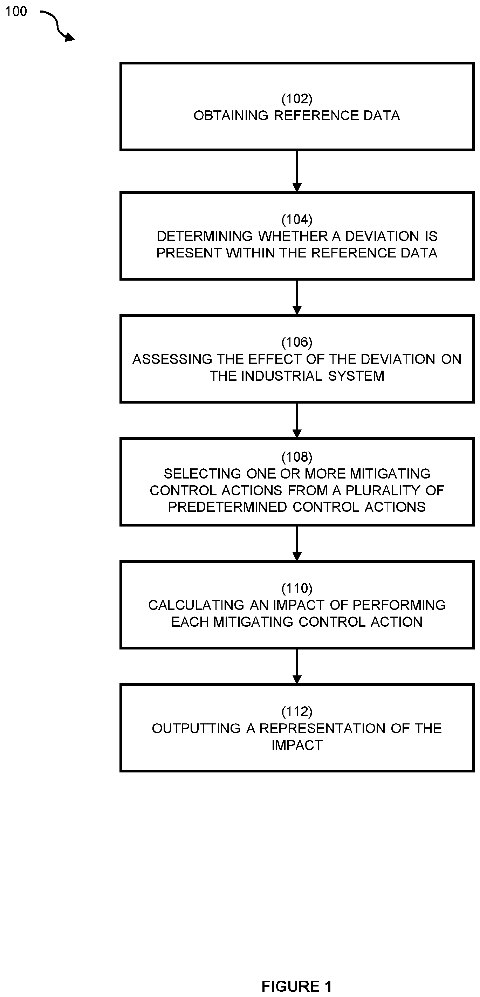

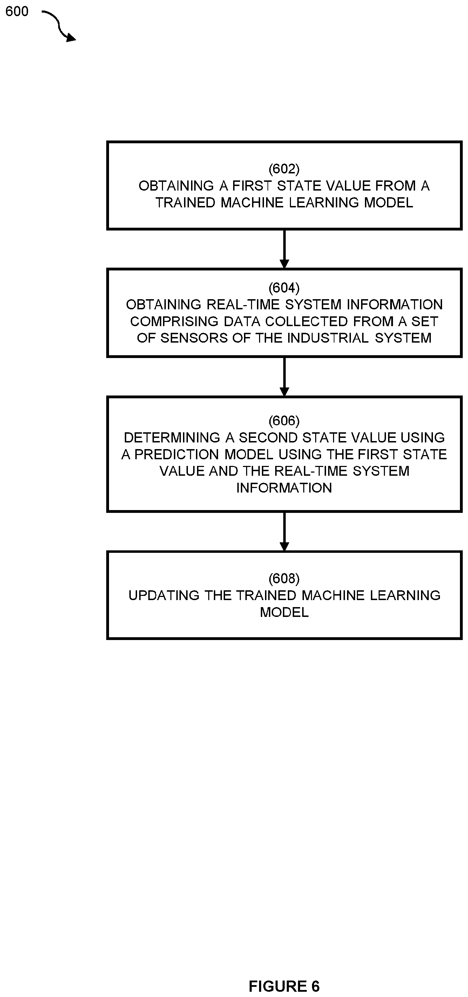

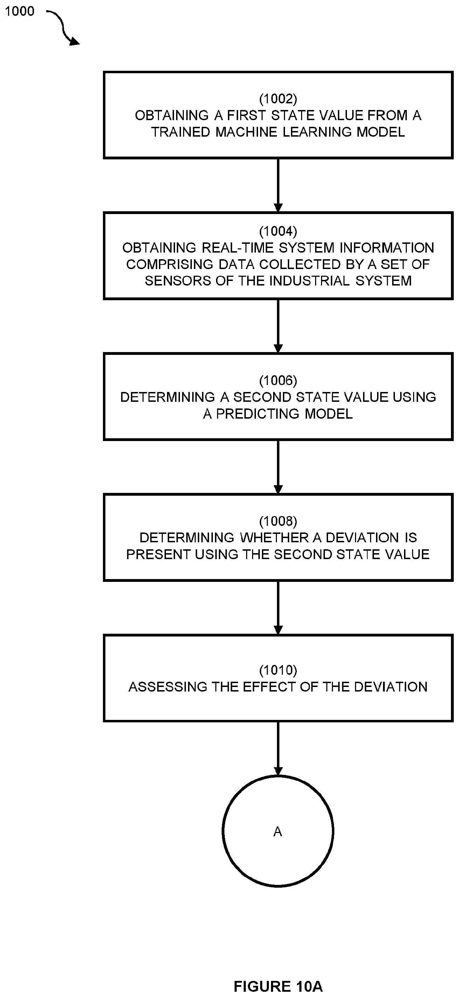

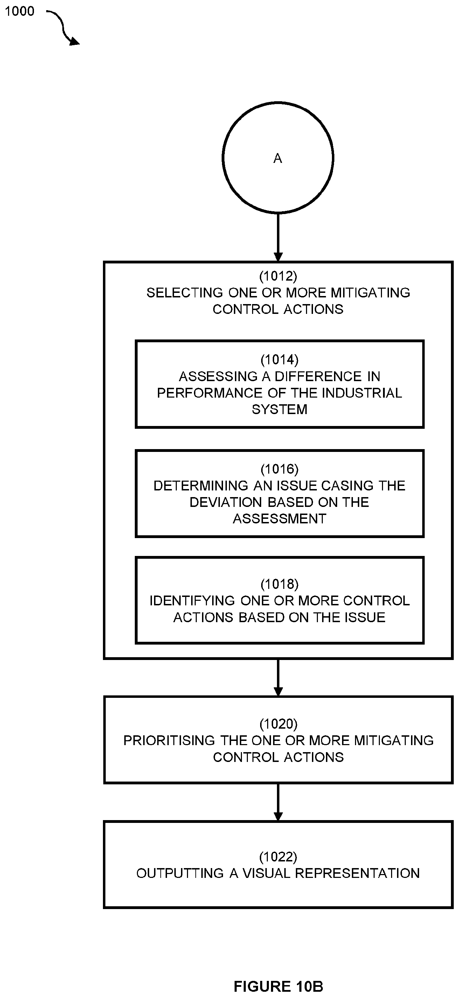

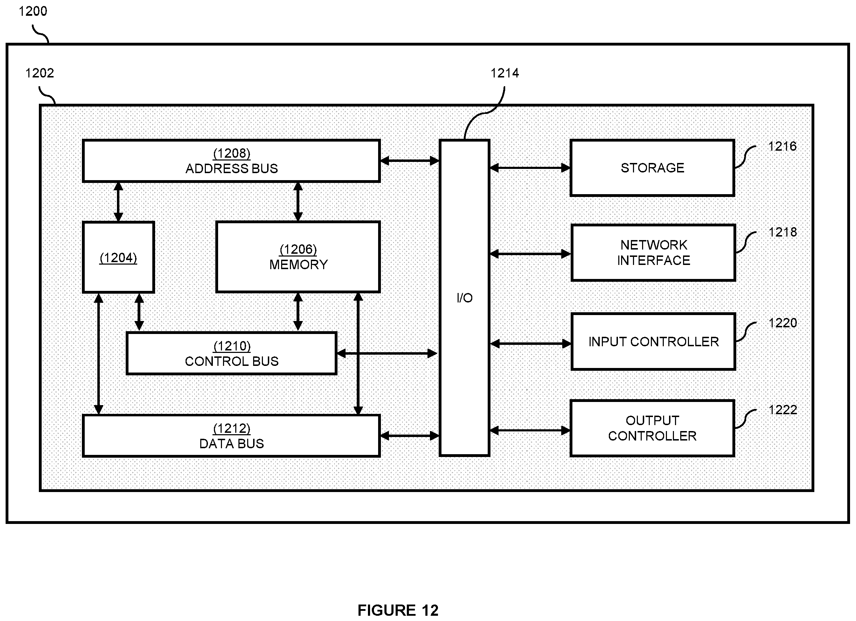

Figures 1 to 5 are directed towards operation decision support, wherein operation recommendations are automatically provided to a user of a user interface to enable selection of operations to change one or more processes of the industrial system. Figures 6 to 9 are directed towards predicting future performance of the industrial system. Figures 10A to 11 are directed towards applying the predicted future performance of the industrial system of Figures 6 to 9 to enable the operation decision support of Figures 1 to 5. The computing system 1200 of Figure 12 is an example system for the implementation of any of the methods described herein, although the skilled person would understand that an alternative system can be used.

The industrial system of Figures 1 to 11 is a processing plant configured to perform at least one process, such as a chemical or physical process. The processing plant comprises at least one component, such as machinery necessary for performing the process. The industrial system further comprises one or more sensors, wherein the sensors collect data associated with the process and/or component of the industrial system. The process of the industrial system results in one or more inputs to the industrial system being used to generate one or more outputs of the industrial system. The industrial system is preferably at least partially monitored and/or operated by a skilled person, such as an operator. The operator is responsible for performing operations that result in a change of process to increase efficiency, output quality, output quantity, plant sustainability, or other performance metric.

Monitoring of the industrial system, either by automated systems or the operator, comprises determining or otherwise obtaining a state value of the plant. The state value is associated with the efficiency, output quality, output quantity, plant sustainability, or other performance metric of the industrial system. The state value is indicative of a state of the industrial system at a specific time point or over a specified time period and is associated with the performance of the industrial system. For example, one state value is obtained directly from data collected from the one or more sensors of the industrial system, such as a state value associated with the quality of the output from the industrial system over a preset time period, e.g. protein density in the output. Another state value is calculated from data collected from the one or more sensors of the industrial system, such as a completion progress of the process of the industrial system at a time point, e.g. 30% completed. One or more state values are used as indicators of whether the process and/or component of the industrial system is performing optimally, e.g. whether the process is efficient, whether the component is in good condition, whether the output yield is high, or another performance metric is optimized.

The one or more sensors of the industrial system typically collect vast amounts of data during operation of the industrial system. Traditional analysis and monitoring of this complex collection of data can be time-consuming and any operator role thus limited to acting reactively to any local events detected or analyzed from the collected data based on static boundary conditions associated with the process and/or component, such as safe operating constrains assigned to the component by a component manufacturer.

A decision support method and/or system, detailed in reference to Figures 1 to 5 below, can aid operators in optimizing the performance of the industrial system by providing information relevant to optimizing performance with accompanying recommended actions. The decision support is based on assessing information comprising the one or more state values and/or real-time data from the one or more sensors of the industrial system that would otherwise be directly presented to the operator or obtained by PLC systems. Determining whether information is relevant to the operator is an important step in decision support and can be accomplished by detecting whether there is a deviation in the information. This provides an objective measure in determining the relevance of the information.

A deviation is a variation in the information associated with the state of the industrial system compared to what is expected, wherein the expectation can be based on historical or predicted trends based on multiple datapoints or based on single datapoints associated with specific conditions and/or values (i.e., a deviation corresponds to a variation of one or more values in the reference data compared to one or more expected values). That is, a deviation is detected by comparing the reference data to expected value of the reference data (e.g., expected values based on historical data or future state data). As there is natural variation in the information associated with the industrial system, such as due to fluctuations in surrounding conditions, quality of inputs, etc., detecting whether there is a deviation comprises determining whether a deviation is greater than a predetermined threshold. The predetermined threshold can by dynamic, such as based on a calculated standard deviation in historical data or predicted future data, or static, such as based on the specification of a component in the industrial system.

In a multiple datapoint example, the information associated with the industrial system comprises a state value associated with the progress of a process in the industrial system. The progress is calculated using data collected from the one or more sensors in real-time, providing an indicator of the state of the industrial system at a current time point.

For example, if the calculated state value is 82% at a current time point, this value is then compared to the historical state values at previous time points. In the present example if the calculated state value followed the trend present in the historical state values, the calculated state value would be 90%, and therefore there is a deviation of 8%. The predetermined threshold for this state value is based on the historical variance in progress over multiple historical process cycles, which results in a predetermined threshold of +/-5%. As the deviation of 8% exceeds the predetermined threshold, it is determined that there is a deviation in the data. The information associated with the state of the industrial system is not limited to current or historical data, and deviations can be detected in information associated with a future state of the industrial system.

Once a deviation exceeding a predetermined threshold has been detected, the impact of the deviation is calculated. The impact of the deviation is the likely effect the deviation will have on the system if the system were to continue to function without intervention. For example, the impact of the deviation may be a reduction in output, increase in energy consumption etc. As such, the impact of the deviation may alternatively be referred to as the effect, the likely effect, the outcome, or the result/consequence of the deviation. If there is no impact associated with the deviation, the deviation may not be relevant to the operator.

Additionally, the impact of the deviation helps in assessing the cause of the deviation, such as a clogged component. With the cause of the deviation assessed, an action to mitigate or resolve the issue can be determined, wherein the mitigating action is linked to a corresponding issue that needs mitigating. The links between issues and actions are based on a priori knowledge of the processes and components of the industrial system, such as process know-how and configuration(s) of the industrial system. The a priori knowledge is therefore dependent on the specific industrial system, and may include information obtained from specialists in the industrial system such as operators or component manufacturers.

The actions with the biggest calculated impact on the issue causing the deviation are selected and presented to the operator, along with the calculated impact. The selected mitigating actions the most relevant course of action for the operator, without requiring the operator to digest and analyze all the information associated with the industrial system used during decision support. Additionally, the calculate impact is the most relevant analysis required by the operator in deciding whether to perform any of the selected mitigating control actions. This is especially important in scenarios where multiple deviations are detected and/or multiple mitigating control actions are selected, and the operator must decide which, if any, to perform when optimizing the performance of the industrial system, based on the experience and technical knowledge of the operator.

For example, a component in the industrial system has a range of optimal performance. Exceeding that range decreases the performance of the component and results in a decrease of process efficiency. In this example, a deviation in the information associated with a future predicted state of the system is detected based on a comparison with historical data associated with the component. It is assessed that the impact of the deviation is that the optimal performance range will be exceeded in two process cycles. The issue is determined to be an increased quantity of byproduct associated with the upcoming process cycles due to changes in quality of an input resource. The control actions associated with the issue include mitigating actions such as adjusting the composition of input resources, slowing the process, or rescheduling the upcoming process cycles. The impact of the selected mitigating actions is calculated, such as a decrease in efficiency of the process resulting from input composition changes or an increase in the time it will take to complete the upcoming process cycles. Both the selected mitigating actions and the impacts are provided to the operator, who decides to perform a mitigating action such as rescheduling the upcoming process cycles.

While correlations and impact analysis are missed with traditional industrial systems, and operators are unable to take up-to-date corrective actions to optimize the industrial system, the inclusion of decision support methods and/or systems results in the operator being provided the most relevant impact analysis alongside predetermined corrective actions. The operator is then able to quickly, accurately, and reliably decide whether to perform the recommended corrective actions and optimize the industrial system based on real-time and/or predicted future information.

Figure 1 shows a flowchart illustrating a method for determining actions to improve operation of an industrial system. Specifically, Figure 1 illustrates a computer-implemented method 100, compatible with the processes of methods 400, 500, 600, 800, 900, and/or 1000.

Figure 1 represents method 100, which is a process for supporting operators of an industrial system, wherein corrective actions are suggested to the operator of the industrial system to minimize any detected deviating trends in the performance of the industrial system. Performing these suggested corrective actions is directed towards mitigating any negative impact on the productivity, performance quality, output quality, sustainability, efficiency, and/or other performance-related operation of the industrial system.

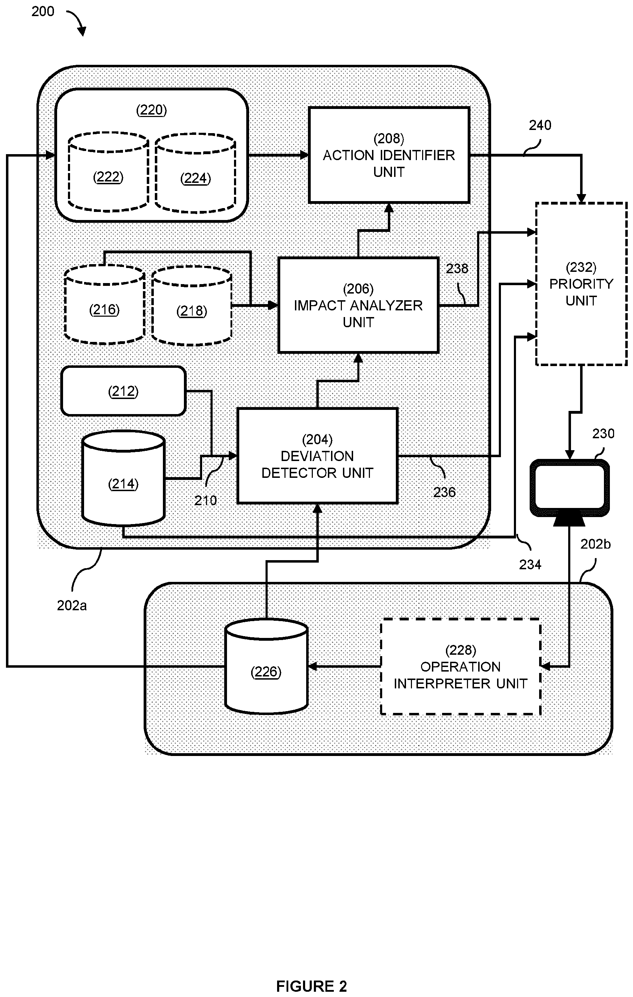

For each individual state value indicative of performance of the industrial system, prediction data, historical data, and/or real-time data from various data sources can be assessed to evaluate for potential deviations in the state value in comparison to an expected state value. The method 100 can be tailored based on the individual state value, wherein different combinations of prediction data, historical data, and/or real-time data are used to reliably identify deviations. Once the deviations are identified, the impact is calculated so that associated issues and corrective actions can be correctly identified. These corrective actions are presented to a user of a user interface of the industrial system, such as an operator, who can review the conclusions and suggested actions to decide whether to perform the corrective action to mitigate the impact of the deviation. An example system for performing method 100 is shown in Figure 2.

Method 100 comprises step 102, step 104, step 106, step 108, step 110, and step 112. Step 102 comprises obtaining reference data at a first time period; step 104 comprises determining whether a deviation is present within the reference data; step 106 comprises assessing the effect of the deviation on the industrial system; step 108 comprises selecting one or more mitigating control actions from a plurality of predetermined control actions; step 110 comprises calculating an impact of performing each control action; and step 112 comprises outputting a representation of the impact.

Step 102 comprises obtaining reference data, such as obtaining reference data indicative of one or more states of the industrial system. The reference data is data relevant to the active process(es) of the industrial system, which is being actively monitored to keep the industrial system performing optimally. The reference data is associated with data collected from one or more sensors of the industrial system, and is described in more detail below. Once obtained, reference data can be combined, refined, or otherwise processed using standard data processing methods, allowing for more reliable evaluation of the reference data in step 104, such as by using data merging techniques including a many-to-many full join computational approach to form a multi-dimensional dataset or an inner join computational approach wherein only the intersection of the combined data is retained, or data cleaning techniques such as filtering.

For example, the reference data comprises real-time data collected from one or more sensors of the industrial system. In another example, the reference data comprises a historical state value associated with historical data accessed from a database or other storage medium. In a further example, the reference data comprises a projected future state value based on current or historical state values, or a predicted future state value based on the output of a trained machine learning model configured to predict the future performance of the industrial system, such as the trained machine learning model of method 600, described in detail below.

The reference data comprises a mixture of at least one of the above examples, wherein the composition of the reference data is tailored to a specific state values that is being monitored for determining whether the industrial system is performing optimally. State values are indicative of the state and/or performance of the industrial system, including: values associated with the progress of a process occurring in the industrial system, such as a progress completion percentage; values associated with industrial system availabilities, such as batch duration times and phases/cycle durations; values associated with quality performance of the industrial system, such as a quality of the outputs to the industrial system, average temperatures of particular processes, or mass and/or energy quantities; values associated with productivity of the industrial system, such as process rates, safety metrics, or equipment and/or component performance indicators; and efficiency or the industrial system, such as energy recovery rates and percentages or resource consumption.

The reference data optionally comprises any of the above referenced state values and/or data collected from one or more sensors of the industrial system used to calculate the respective state value. For example, the reference data comprises state values associated with the specific monitored state value or the data used to calculate or otherwise obtain the comprised state values. This results in reference data that comprises all potential variables that could impact the monitored state value, which improves the accuracy and reliability of deviation detection, as described in step 104 below.

The one or more sensors comprise physical sensors, motion sensors, proximity sensors, time-based sensors, virtual sensors, detectors, and/or transducers. Moreover, the reference data comprises constant, e.g. time-independent, values, variable, e.g. time-dependent, values, or a combination of the two.

Step 104 comprises determining whether a deviation is present within the reference data, such as determining whether a deviation greater than a predetermined threshold is present within a comparison of the reference data to expected values of the reference data, wherein the predetermined threshold is associated with a process of the industrial system. A deviation is a variation in the information associated with the state of the industrial system compared to what is expected, wherein the expectation can be based on historical or predicted trends based on multiple datapoints or based on single datapoints associated with specific conditions and/or values. For example, the deviation is an outlier, such as a global, contextual, or collective outlier, or a value exceeding an expected value range.

Deviation detection is based on data sequences or real-time data measurements, such as within a predetermined window of a set number of most recent measurements or a predetermined time window. Based on the deviation type, determining whether there is a deviation requires different predetermined thresholds, such as a threshold based on processed measurements e.g. estimated variance in the reference data from a measured value. For example, the threshold is based on process expertise such as recipe parameters, equipment specifications, and/or historic performances.

In one example where the reference data comprises a state value associated with a component within the industrial system, the predetermined threshold used for deviation detection is a constant value based on a safe and efficient range of operation for the component within the industrial system. In another example where the reference data comprises a state value associated with a component within the industrial system, the predetermined threshold used is variable and the deviation detection is based on historical and/or predicted data trends. Deviation detection allows for component and process specific deviation detection even if the reference data still falls within standard safety ranges and deviations can be detected early, such as a batch process taking longer to finish in a specific component than expected or is historically normal for the specified component, even when the total time taken is within standard operation times for the component in generalized operation. Therefore, determining whether a deviation is present results in increased efficiency of the industrial system due to early process and component specific detection.

Step 106 comprises assessing the effect of the deviation on the industrial system, such as, in the event that a deviation greater than the predetermined threshold is present as determined in step 104, assessing the effect of the deviation on one or more outputs of the industrial system based on a difference between a performance of the industrial system at a first time point with the deviation present and a projected performance of the industrial system at the first time point without the deviation present. The first time point is a current time point or a future time point.

In the event that the first time point is a future time point, the predicted performance of the industrial system at the future time point with the deviation present is based on a predicted future state of the industrial system based on the state of the industrial system comprised within the reference data. The predicted performance is obtained using machine learning processes such as method 600, described below, or mathematical processes such as averaging and trend prediction. In the event that the first time point is a current time point, the performance of the industrial system is represented by a current state of the industrial system associated with data collected real-time or during a current time period from one or more sensors of the industrial system.

The projected performance of the industrial system at the first time point is a mathematical projection of a state of the industrial system based on the current state of the industrial system if the deviation is constant and/or historical states of the industrial system if the deviation is time-dependent, such as growing over time. The mathematical projection is determined using standard mathematical processes, such as mean average over a predetermined time window or trend forecasting methods, e.g. linear regression techniques. Alternatively, the current and/or historical performance of the industrial system is used, or a virtual performance of the industrial system generated based on a theoretical optimal performance and data collected from the one or more sensors of the industrial system.

Step 108 comprises selecting one or more mitigating control actions from a plurality of predetermined control actions, wherein each predetermined control action represents a predetermined operation to change one or more processes of the industrial system and selecting comprises identifying an issue and subsequently identifying one or more control actions based on the identified issue. The mitigation actions are a series of predetermined actions which are enacted by the system to address identified issues.

An issue is identified from a plurality of predetermined potential issues as causing the deviation based on the assessed effect of the deviation. Additionally, one or more control actions from the plurality of predetermined control actions are identified based on the identified issue causing the deviation, wherein the one or more identified control actions are selected to reduce the effect of the deviation of the one or more outputs of the industrial system. The plurality of predetermined issues, the effects that would result from the plurality of predetermined issues, and plurality of predetermined control actions are based on process know-how and configurations of the industrial system, and are stored on a corrective action databased, which is a database associated with the industrial system and is either local to the industrial system or not, such as an edge-based approach or cloud database. Each issue is linked to an impact. Each issue is also linked to a control action in a one-to-one, one-to-many, or many-to-one relationship. The corrective action database is described in more detail below in reference to corrective action database 220 of operation support system 200.

For example, a heat recovery unit in the industrial system has a limited capacity in the amount of heat that can be stored. When more heat is recovered than used, the unit will eventually reach its maximum holding capacity. In this case, the deviation detection of step 104 determines that there is a deviation present in the reference data, and the assessment of step 106 assesses the deviation to be due to more heat recovered than typical based on historical trends. The selected mitigating control action of step 108 is to reschedule production to use the stored heat to gain the full potential of heat recovery, based on a calculated difference in energy efficiency between operating when the heat recover unit is at capacity and not at capacity.

Step 110 comprises calculating an impact of performing each mitigating control action, such as calculating an impact of performing each mitigating control action on the one or more outputs of the industrial system. The impact calculation takes into one or more types of impacts based on potential consequences of the impact associated with the industrial system. Impact types and/or impact values comprise any of: production measures, operational measures, environmental measures, safety measures, or efficiency measures. Continuing the aforementioned example of a heat recovery unit, the impact of rescheduling production to use the stored heat is performed, including knock-on impacts such as rescheduling subsequent processes and energy used by the system during idle-time.

For example, the calculated impact can include output impacts related to changes in process times, changes in output quality and/or quantity, changes in resources required for maintaining output quality and/or quantity, changes in sustainability, changes in energy consumption, and/or changes in environment footprint. When the calculated impact comprises more than one impact type, a total impact can be calculated based on applying a weighting to each impact type. Weighting the impact types results in a tailored final impact, such as a tailored total impact for each deviation type, each process of the industrial system, each component of the industrial system, each operating of the focus of the industrial system, e.g. preserving water during a drought, and/or each industrial system. Optionally, the one or more selected control actions are then prioritized or otherwise sorted based on the total impact, such as using the process of method 400.

Step 112 comprises outputting a representation of the impact, such as outputting a representation of the impact of performing one or more mitigating control actions to a user interface, therefore enabling a user of the user interface to select an operation to initiate one or more mitigating control actions to change one or more processes of the industrial system, such as using a visual representation based on the example of Figure 300.

For example, the user interface displays the total impact and/or at least one calculated impact type, such as the impact type most relevant to the deviation, the issue, and/or the one or more mitigating control actions. The user of the user interface uses technical know-how associated with operation of the industrial system to determine whether to initiate one or more mitigating control actions, no action, or another action to change one or more processes of the industrial system with the aim of mitigating the impact of the deviation on the performance of the industrial system. Preferably, the determination of the user of the user interface is stored and used to improve reliability and/or accuracy of step 104, step 106, step 108, or step 110, such as using any of the steps of method 500.

In the event that the control actions are prioritized, the operation to change one or more processes of the industrial system is the mitigating control action of highest priority which, when selected, causes a change in one or more processes of the industrial system such that the impact of the deviation on the industrial system is mitigated. Alternatively, the operation to change one or more processes of the industrial system is different from the mitigating control action of highest priority.

Optionally, step 106 is performed in conjunction with step 110, wherein assessing the effect of the deviation comprises calculating an impact of the deviation. Alternatively or additionally, step 110 is performed in conjunction with step 106, wherein calculating an impact of performing each mitigating control action comprises calculating an impact of the deviation based on assessing the effect of the deviation.

Preferably, method 100 is employed for one unique state value. For example, for a plurality of state values, method 100 is repeated in series or in parallel, wherein, for example, the predetermined threshold of step 104 is dependent on the particular state value. An example regarding a single state value using the steps of method 100 is detailed below. Alternatively, method 100 can be performed for a plurality of state values, such as wherein a set of state values are associated, and a single deviation classifier can be used for each of state value of the set of state values.

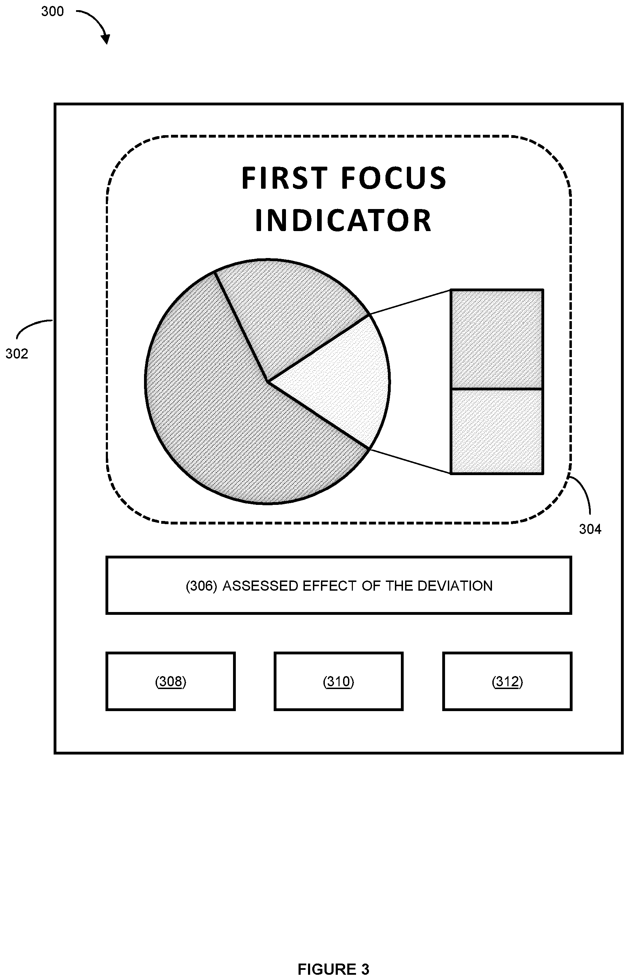

For the single state value, step 102 comprises obtaining a predicted state value, historic state values and additional data from multiple data sources for use in evaluating possible deviation. Depending on the single state value, various types of evaluations are selected, such as multiple trained machine learning models, wherein the input is a combination of real-time data sources, historic data, and estimated data. The outcome of such an analysis could be, for example, "Inefficient heating rate in Wort kettle". At step 104, the deviation is detected based on data sequences or real-time measurements (possibly within a window of the most recent measurements or measurements from within the last few minutes). Based on the deviation type, the individual deviation classifiers require different measurements or features. A feature is a pre-processed measurement such as estimated variance from a measured value. Optionally, at the same time, a relevant graphical illustration of the symptom is built, as shown in Figure 3. Such an illustration is, for example, a time series, batch performance or any other relevant mapping of performance data illustrating the deviation.

Once a deviation is triggered, at step 106, the consequences for the impacted single state value is calculated and the issue identified at step 108. This analysis supports the plant operator to know if it is better to continue operation along the current plan or whether there exists a better path in terms of economy. The consequence calculation can be based on efficiency calculations of how much the time and energy cost of operation is increased or rate of production is lowered compared to a viable alternative, such as clean in place (CIP) process, wherein one or more relevant components, processes, and/or equipment of the industrial system is shut down to clean the component, e.g. cleaning a filter without removing the filter. Such knowledge is based on, for example, equipment specs, cost of products, cost of resources and the system state, e.g. the degree of fouling. For example, with the given degree of fouling, the equipment uses more electrical power. The average allocation of electrical power for this particular process of the industrial system is 20% of the total allocation. The added allocation of operation per hour is 5% per hour. The average added allocation required for a CIP is 15%. Consequently, the assessed effect of the deviation is more electrical power being used and that performing a CIP would be the most efficient action in three hours of operation or more.

Once the issue is determined, a corrective action is identified at step 108 based on process know-how and plant configurations, such as using corrective action database 220 described in detail below in reference to Figure 2. The impact of performing the action is also determined, such as using step 110. A plurality of control actions are stored in a corrective action database used to select the action with biggest impact on the issue correction. An outcome of such an action identifier is, for example, "Heat exchanger to be cleaned, when possible". The appropriate set of actions for a specific problem are typically known a priori. In this case, the possible set of actions is known based on the detected deviation, i.e. rule-based. In the above case of fouling in the heat exchanger, it is known by the skilled person, such as the operator of the industrial system, that when the deviation of the heat transfer coefficient is too low, performing a CIP of the unit is recommended. Another case is a buffer tank between three lines (P, C1 and C2). One line (P) is a producer that fills up the buffer tank, and the two other lines (C1 and C2) perform a downstream processing of the product from the buffer tank that removes product from the buffer tank, e.g. a UHT treatment. When there is no balance in the input- and output-flow of the tank, the tank will be filling up or emptying. Three appropriate actions if the tank risks to go full could be: a. reschedule the process to increase the product rate of downstream process e.g. C1 if possible; b. reschedule to increase the product rate of downstream process e.g. C2 if possible; or c. reschedule to decrease the product rate of upstream process P. Another case is a heat recovery unit that has a limited capacity in the amount of heat that can be stored. When more heat is recovered than used, the unit will reach its maximum holding capacity. In this case, the solution is to reschedule production to use the stored heat to gain the full potential of heat recovery, similar to the former example. Preferably, the step 108 and/or step 110 is highly a process know-how-based analysis based on operation rule-based models.

At step 112, the above conclusions are performed for each deviating state value. Optionally, the results of the prior steps are input to priority algorithms that order the issues for operator focus. The priority is a plant target-based sorting that accounts for a tailored weighted combination of production, environmental, safety or other measures. For example, if an observed issue has 3 set of consequence, "C" namely:

$C_1$ a first value based on production loss from longer time batches instead of time-optimized batches;

$C_2$ a second value based on product quality rework due to yield losses, meaning too much use of expensive raw material;

$C_3$ a third value based on sustainability, energy use, environmental footprint.

On each consequence, a weight index, "$I$" may be applied to conclude a total cost, $C_T$. $C_T$ of consequences is therefore $\sum_{k=1}^{n}(C_k I_k)$. The issues and suggested actions are then sorted according to the total cost, $C_T$, of the issue in ascending order. The very final sorted list of issues is presented to the operator.

Optionally, the reference data of step 102 comprises data collected over a first time period from one or more sensors of the industrial system, wherein the data collected over a first time period is indicative of a historical state of the industrial system. Additionally or alternatively, the reference data comprises real-time data collected by the one or more sensors of the industrial system, wherein the real-time data is indicative of a current state of the industrial system. Additionally or alternatively, the reference data comprises a predicted state value of the industrial system, wherein the predicted state value is associated with a predicted performance of the industrial system at the second time period and is based on the data collected over the first time period, and wherein the predicted state value is indicative of a future state of the industrial system. Beneficially, the different compositions of reference data allow method 100 to be applied based on monitoring a real-time value, a historic trend, and/or a predicted value in the future. This adaptability results in an operation support system that can be applied to a wide range of industrial systems, including those where complex processes make predictions unreliable, or those where real-time data collection is not feasible.

If the reference data comprises data collected over a first time period, determining whether the deviation is present optionally comprises evaluating the data collected over the first time period, wherein the data collected over the first time period is time-dependent, and identifying one or more trends and/or time-dependent tendencies over the first time period in the evaluated data collected over the first time period.

Further optionally, the data collected from the one or more sensors of the industrial system associated with the reference data is collected over a predefined time window, such as ten minutes, the duration time of a batch, and/or duration of one or more process cycles of the industrial system, or the data is collected real-time. Alternatively or additionally, the data collected from the one or more sensors of the industrial system comprises a data sequence of a predetermined size, such as ten data points or the latest hundred data points collected from a particular sensor.

Preferably, step 104 is performed by a deviation classifier. The deviation classifier is based on a first principles model and/or is one or more trained machine learning models, wherein each trained machine learning model is configured to detect one or more deviation type(s) above a predetermined threshold. For example, the one or more trained machine learning models are any of supervised machine learning models, unsupervised machine learning models, or semi-supervised machine learning models, wherein example include: a support vector machine, a neural network, a decision tree-based algorithm, a set-based algorithm, a generalized likelihood ratio detector, an autoencoder, a Bayesian network, a K-nearest neighbor algorithm, Density-Based Spatial Clustering of Applications with Noise (DBSCAN) algorithm, or a cumulative sum detector. A trained machine learning model from the one or more trained machine learning models is selected based on the one or more states and/or state values associated with the reference data. Additionally or alternatively, the deviation classifier is configured to output whether or not there is a deviation based on an input comprising the reference data indicative of one or more states of the industrial system. Optionally, the predetermined threshold is determined by the deviation classifier.

In one example implementation, the deviation classifier is based on an unsupervised autoencoder neural network.

The autoencoder is a feedforward, non-recurrent neural network comprising an input layer, three hidden dense layers, and an output layer. The input layer and the output layer have the same number of nodes such that the autoencoder outputs a reconstruction of the input data. The autoencoder is trained to learn a first transformation from the high-dimensional input space to a lower-dimensional space (as represented by the middle layer of the three hidden dense layers), and a second transformation from the lower-dimensional space back to the high-dimensional input space. By training the autoencoder on data associated with normal operation of the industrial system, the autoencoder learns how to reconstruct such normal operation data with a high-degree of confidence whilst reconstructing anomalous operation data (i.e., deviations) with a lower-degree of confidence. The reconstruction obtained from the autoencoder is thus used to classify whether a state value of the reference data is a deviation.

As stated above, the autoencoder is trained on data representing the "normal" operating state, such as data collected from one or more sensors of the industrial system during a state where the industrial system was performing optimally. During training, the autoencoder learns the interactions between the various variables and how to re-construct them back to the original variables (as the output). As a process or component of the industrial system is impacted by an issue, the interaction between the variables is affected, such as by changes in pressure, temperature, or other values associated with the state values. This results in increased error in the output from the autoencoder, as the autoencoder is no longer able to reconstruct the input (the impacted data) based on relationships learned during training (normal operating data). By monitoring the reconstruction error, an indicator that the input data is deviating from the normal operating data can be obtained, e.g. the error will increase as the equipment degrades. A probability distribution of the reconstruction error is then used to identify whether a datapoint represents a deviation, and consequently whether a deviation is present in the reference data.

In the presently described implementation, the training data comprises one or more data sets, wherein each data set consists of individual files that are 1-second infrared signal snapshots recorded at specific intervals associated with the output quality of a process. Each file consists of 20,000 points with the sampling rate set at 10 kHz. The file name indicates when the data was collected. Each record (row) in the data file is a data point. Larger intervals of time stamps (showed in file names) indicate resumption of the experiment in the next working day. An assumption is that process degradation occurs gradually over time as the input composition to the process degrades, so one datapoint every 10 minutes is used for subsequent analysis. Each 10 minute datapoint is aggregated by using the mean absolute value of the infrared photon sensor recordings over the 20,000 datapoints in each file, which is merged to generate a single dataframe.

For this example, the goal is to identify degradation of output quality based on infrared signal snapshots, and resulting in predictive mitigation actions to be selected in order to avoid a output quality control failure (e.g. inputting different resources to the process or repeating the process until the output is higher quality). The data sets, each consisting of data collected from four infrared photon sensors, are used to train the autoencoder. As the equipment is run until the process has repeatedly cycled and the output quality has completely degraded, data from the first process cycles of operation is used as training data to represent normal operation associated with high quality output. The remaining part of the datasets for the time leading up to the output degradation is then used as test data, to evaluate whether the different methods can detect the deviation in advance of the complete output degradation. After loading the infrared data, the index is transformed to a datetime format and sorted by index in chronological order to be accessed for training.

A standard split is performed on the training data to isolate a portion for testing. If the autoencoder is being updated on new training data, such as wherein a new data set is added to previous training data, a split is not required as original testing data can be used. Standard data preprocessing is performed on both the training and testing data to scale the data for optimal training, such as a Scikit-learn "MinMaxScaler" so the data is in the range [0,1].

As stated above, the autoencoder compresses the infrared sensor readings to a low dimensional representation, which captures the correlations and interactions between the various variables impacting the infrared sensor readings over time. Using the aforementioned neural network with three hidden layers, the central hidden layer has fewer nodes than the surrounding layers. More particularly, the first hidden layer comprises 15 nodes, the middle hidden layer has 5 nodes, and third hidden layer has 15 nodes. The mean square error is used as the loss function, and the autoencoder is trained using the "Adam" optimizer, which is a stochastic gradient descent method that is based on adaptive estimation of first-order and second-order moments. Five percent of the training data is isolated for validating the training after each epoch (validation_split = 0.05). This helps determine whether the autoencoder is training successfully, such as whether it is converging to a global minimum, or whether it is underfitting.

The distribution of the calculated loss, such as the average of absolute differences between the actual and the predicted value (mean absolute error), in the training set is collected and used to identify a suitable predetermined threshold value for identifying a deviation. This helps ensure that the predetermined threshold is set above the "noise level", and that any flagged deviations are statistically significant above the noise background and thus relevant to an operator of the industrial system. From the calculated loss distribution, an example predetermined threshold of 0.4 is identified. The loss in the test set is then calculated to check when the output crosses the predetermined threshold. The same metrics are also calculated for the training set, and all data merged to form a single dataframe. A standard plot of reconstruction loss against datetime is optionally plotted to visualize the autoencoder output.

Alternatively or additionally, data associated with one or more processes of the industrial system, and/or data associated with one or more components of the industrial system, is used in determining whether there is a deviation. For example, process and/or component specific input is used to select the trained machine learning algorithm, used to pre-process the reference data prior to input to the deviation classifier, and/or used as an input to the deviation classifier.

Optionally, step 106 and step 108 are interchangeable. For example, determining the issue in step 106 further comprises using a rule-based model associated with one or more processes of the industrial system, and comprises analyzing the plurality of predetermined control actions of step 108 based on the rule-based model.

Optionally, step 112 further comprises generating a visual representation of the deviation impact by determining a relevant graphical interpretation of the impact of the deviation from a list of graphical interpretations based on mapping the data associated with the impact of the deviation to the one or more state values obtained from or calculated from the reference data.

Figure 2 shows a high-level system architecture diagram in accordance with the present disclosure for determining actions to improve operation of an industrial system. Specifically, Figure 2 illustrates an operation support system 200 configured for performing method 100 and directed towards determining actions to improve operation of an industrial system.

Operation support system 200 comprises a decision module 202a and a feedback module 202b. The decision module 202a comprises a deviation detector unit 204, an impact analyzer unit 206, and an action identifier unit 208. The deviation detector unit 204 obtains reference data 210 based on either real-time data 212 or trend data 214. The impact analyzer unit 206 optionally obtains resource data 216 and/or equipment data 218. The action identifier unit 208 obtains data from the corrective actions database 220, which stores a plurality of predetermined issues 222 and a plurality of predetermined control actions 224. The feedback module 202b comprises feedback data 226, wherein feedback data 226 can be obtained from the operation interpreter unit 228. The decision module 202a and the feedback module 202b are in communication with a user interface 230. Optionally, operation support system 200 further comprises priority unit 232, which obtains graphical issue data 234, issue symptom data 236, impact state value data 238, and/or corrective action data 240.

The deviation detector unit 204 obtains reference data 210, such as by performing step 102 of method 100. The reference data 210 comprises either real-time data 212 and/or trend data 214. Real-time data 212 is associated with data collected by one or more sensors of the industrial system, which is indicative of a current state of the industrial system. Trend data 214 associated with data collected by the one or more sensors at a first time point, which is indicative of a historical state of the industrial system, or data collected by the one or more sensors at a second time point, which is indicative of a future state of the industrial system. For Example, trend data 214 comprises historical data and/or prediction data, such as predicted future data obtained using method 600 detailed below. Optionally, the deviation detector unit 204 obtains inputs comprising prediction data, values collected from one or more sensors of the industrial system, and calculated state values indicative of a state of the industrial system.

The deviation detector unit 204 determines whether a deviation is present within the reference data 210, such as by performing step 104 of method 100. The deviation detector unit 204 identifies deviations based on data sequences, such as from trend data 214, or real-time measurements, such as real-time data 212. Deviation detector unit 204 is one or more deviation classifiers, where each classifier is configured to determine whether a deviation is present. The one or more deviation classifiers are based on first principle models and/or machine learning models, such as support vector machines, neural networks, decision tree-based methods, set-based methods, Generalized Likelihood Ratio (GLR) detectors or cumulative sum detectors. For example, the deviation detector unit 204 is a model trained on both normal data, such as where a deviation is not present or is present and below a threshold, and fault scenario data, such as where a deviation is present and above a threshold. The threshold is a predetermined threshold, and each deviation classifier has a corresponding threshold.

The impact analyzer unit 206 obtains whether there is a deviation present from the deviation detector unit 204 and assesses the effect of the deviation on one or more outputs of the industrial system based on a difference between performance of the industrial system with the deviation present at a first time point and a projected performance of the industrial system at the first time point without the deviation present, such as using step 106 of method 100. The impact analyzer unit 206 analyzer calculates the consequences for any impacted state values of the industrial system.

The action identifier unit 208 obtains the assessment from the impact analyzer unit 206 and selects one or more mitigating control actions from the corrective actions database 220, such as performed using step 108 of method 100. Selection comprises identifying an issue from a plurality of predetermined issues 222 based on the assessment from the impact analyzer unit 206 and identifying one or more control actions from the plurality of predetermined control actions 224 based on the corresponding issue. The one or more control actions are selected to reduce the effect of the detected deviation assessed at the impact analyzer unit 206.

The corrective action database 220 is an organized collection of predetermined issues, impacts that would result from the predetermined issues, and corresponding predetermined control actions which can be accessed by the operation support system 200 and a database user associated with the industrial system, such as an operator. Each predetermined issue is linked to an impact and is associated with at least one predetermined control action based on rules associated with process know-how and configuration(s) of the industrial system. The correction action database 220 is therefore specific to the industrial system. The links between predetermined issues and predetermine control actions can be static, wherein links between predetermined issues and predetermined control actions are based on historical know-how obtained from the database user, or dynamic, wherein links between predetermined issues and predetermined control actions change depending on operation decisions and/or feedback from a user of the industrial system.

For example, an operator of the industrial system lists all the issues that could occur in the industrial system, such as each potential issue associated with each process or component of the industrial system, and the impacts that would result from each issue. The operator then lists each control action that would mitigate or otherwise resolve each listed issue. The listed issues and listed control actions are then organized as a plurality of predefined issues 222 with the associated impact of each issue and a plurality of predefined control actions 224 in the corrective action database 220. Alternatively, a list of all control actions that could potentially be performed on the industrial system is generated. One or more issues that would be impacted by each control action is also listed. The potential impact of each issue is then further listed or otherwise stored with the associated issue. The corrective action database 220 is then formed by organizing the listed control actions into a plurality of predetermined control actions 224 and an associated plurality of predetermined issues 222, wherein each issue is associated with one or more impacts on the performance, state, or process of the industrial system. Additionally or alternatively, each control action is associated with one or more impacts.

Details regarding issues, impacts (effects), and potential control actions may be found in numerous technical sources such as "Brewery utilities (manual of good practice)" by EBC Technology and Engineering Forum, Getränke-Fachverlag Hans Carl, Nürnberg, (1997), "Clean-in Place for Biopharmaceutical Processes" ed. by D A Seiberling, Drugs and the Pharmaceutical Sciences 173, pp. 302-313 (2007), and "Handbook of Milk Powder Manufacture (2nd Edition)" by J Pisecky, GEA Process Engineering A/S p. 222 (2012).

By knowing or otherwise obtaining an impact, such as an impact of a deviation determined using the impact analyzer unit 206, the corrective action database 220 can be accessed to obtain an associated issue from the plurality of predetermined issues 222 (i.e., by identifying the issue which has an associated impact which is similar to, or matches, the determined impact). As the corrective action database 220 is configured to link each predetermined issue to one or more control actions of the plurality of predetermined control actions 224, the associated control action can subsequently be obtained from the corrective action database 220. If a new process, component, or control action-issue link is made available to the industrial system, corrective action database 220 is updated with new predetermined issues, control actions and, optionally, the associated impacts.

The user interface 230 obtains the one or more mitigating control actions from the action identifier unit 208 along with a calculation of the impact of each mitigating control action on the outputs of the industrial system, such as performed using step 110 of method 100. The user interface 230 provides a representation of the impact of performing one or more mitigating control actions to a user of the user interface, such as performed using step 112 of method 100. The representation of the impact comprises calculations obtained from the impact analyzer, such as impact state value data 238. This analysis supports the user of the user interface, such as an industrial system plant operator, to know if it is better to continue operation along the current plan or whether there exists a better path in terms of economy, and therefore helps enable the user of the user interface to select an operation to initiate one or more mitigating control actions to change one or more processes of the industrial system.

Optionally, the user interface 230 obtains one or more mitigating control action from the action identifier unit 208 via the priority unit 232. The priority unit 232 is configured to prioritize the one or more mitigating control actions based on the calculated impact of performing each action, wherein the priority unit 232 obtains graphical issue data 234, issue symptom data 236, impact state value data 238, and/or corrective action data 240 and uses the obtained data in prioritizing the one or more control actions. The graphical issue data 234 comprises data relevant for generating a graphical representation of the impact of a detected deviation, such as relevant time series data, batch performance data, or any other relevant mapping of data associated with the performance of the industrial system and the deviation. And example graphical representation is illustrated in Figure 3.

The operation interpreter unit 228 depends on the type and/or of feedback data 226 required. For example, operation interpreter unit 228 is configured to interpret whether one of the selected control actions has been implemented, or whether an alternative control action was implemented, initiated, and/or completed. The alternative control action includes no course of action for a predetermined time window. Additionally or alternatively, operation interpreter unit 228 is configured to label the selected control actions, such as whether a control action is relevant or not relevant, whether an issue was the cause or not the cause of a deviation, and/or whether the deviation was relevant or not relevant.

In an example application of operation support system 200, occupation time of a batch in a first industrial process is predicted to take fifteen minutes longer than is typical based on real-time data 212 and trend data 214. The minimum and maximum occupation time is predetermined, based on technical know-how, to be 105 minutes and 135 minutes respectively. The average historical values comprised within trend data 214 confirm the above. The impact analyzer unit 206 assesses that occupation time has an impact on the productivity of the first industrial process and quality of the output of the first industrial process. Based on equipment data 218, the capacity associated with the first industrial process is 2000 hectoliters. Based on resource data 216, downgrading the product associate with the first industrial process has an impact of 100 weighted units per hectoliter.

Impact analyzer unit 206 calculates two impacts: productivity loss from the first industrial process being occupied for additional time, with resource data 216 of occupation resulting in 30000 weighted units per hour, therefore the effect is 7500 weighted units; and lower quality yield leading to process repetitions, resulting in mixing the batch associated with the first industrial process with other lower quality yield batches, therefore resulting in losing margins on the higher quality batch with a total effect of 20000 weighted units. Together, the impact analyzer unit 206 assesses the two impacts to total 27500 weighted units.

The action identifier unit 208 analyzes reasons, such as by using real-time data 212 of, e.g., the input and output flow from a plurality of predetermined issues 222, which is analyzed alongside corresponding historic values from trend data 214. The input and output flow are determined not the be the issue behind the occupation time taking longer than is typical. Heat-up rate, another issue from the plurality of predetermined issues 222, calculated using real-time data 212, is determined to be lower than historical rates for the first industrial process from trend data 214 based on a comparison of actual heat-up rate versus expected head-up rate based on volume, composition, equipment information, heat surface and steam supply properties obtained from resource data 216 and equipment data 218 alongside real-time data 212. The main reason is determined to be associated with the heat-up rate. Using the corrective action database 220, a corresponding control action from a plurality of predetermined control actions 224 is selected to be "re-visit steam-valve settings in the mechanical setup".

The priority unit 232 obtains not only data associated with the heat-up rate with a calculated impact of 27500 weighted units but also other issues with associated calculated impacts. The priority unit 232 then sorts the issues according to the calculated impacts. A user of the user interface 230 then determines that the suggested issue and/or action has relevance, which is registered by operation interpreter unit 228. The consequence is readjustment of one or more predetermined thresholds of deviation detector unit 204, or alternative proposals for actions upon the same issue in the corrective action database 220, e.g. "Increase steam supply setpoint".

Preferably, operation support system performs any of the steps of method 100, 400, and/or 500, and supports the display of visual representation 300 of Figure 3.

Figure 3 shows an example representation of an impact of an issue on the performance of an industrial system on a user interface of the industrial system. Specifically, figure 3 illustrates an example visual representation 300 to be displayed to a user of the user interface at the user interface to graphically convey the impact of an identified issue with the industrial system.

Visual representation 300 comprises a display 302 of the user interface, a graphical illustration 304, impact information 306 associated with the assessed effect of the deviation, a first icon 308 associated with a first control action, a second icon 310 associated with a second control action, and a third icon 312 associated with feedback data.

The display 302 is a whole or partial display of the user interface, wherein the display could be directly or indirectly connected to the industrial system, and is accessible to a user of the user interface such as an operator of the industrial system. The display 302 is configured to provide a graphical illustration 304 and impact information 306 to the user of the user interface. The graphical illustration 304 and impact information 306 are associated with a detected deviation and an assessed effect of the deviation on the industrial system. The graphical illustration 304 is determined to be the most relevant graphical representation of the impact of the deviation, and therefore the graphical illustration 304 and impact information 306 are optionally the same displayed data representation.

The user interface, such as user interface 230 of Figure 2, is further configured to receive data associated with a user selection. The user selection corresponds to the first icon 308, the second icon 310, or the third icon 312. The first icon 308 is associated with a first control action, such as a mitigating control action with the highest priority control action that, when performed, reduces the assessed effect of the deviation. The second icon 310 is optional and is associated with a second control action, such as the second highest priority mitigating control action, or a control action associated with not performing the highest priority control action, such as a control action that, when performed, results in no change to one or more relevant processes of the industrial system. The third icon 312 is representative of an option for the user to contribute feedback associated with the control action of the first icon 308, such as whether the mitigating control action of the first icon 308 is appropriate regarding the impact information 306, wherein feedback is based on the technical knowledge of the user and the information provided from the visual representation 300.

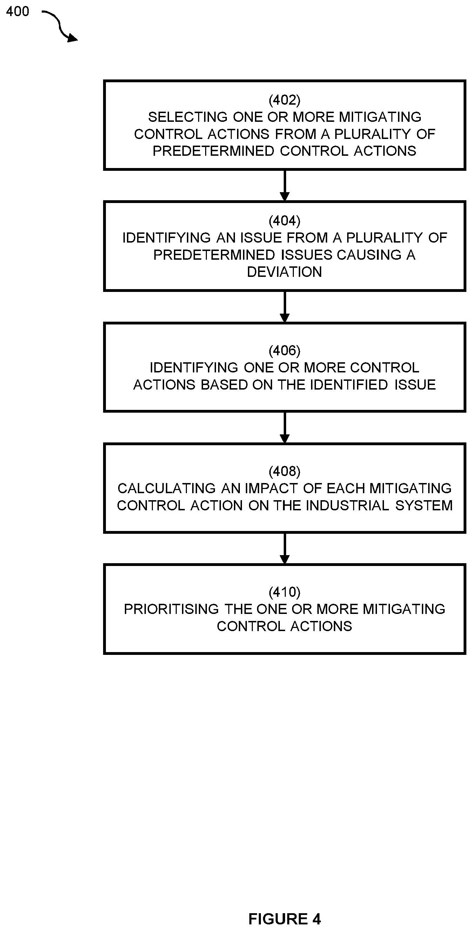

Figure 4 shows a flowchart illustrating a method for selecting one or more mitigating control actions based on an impact on performance of an industrial system. Specifically, Figure 4 illustrates a computer-implemented method 400 compatible with the processes of methods 100, 500, 600, 800, 900, and/or 1000.

Figure 4 represents method 400, which is a process for selecting and prioritizing one or more mitigating control actions. The process can be performed in addition or in substitution to step 108 of method 100. First, one or more mitigating control actions from a plurality of predetermined control actions are selected. In this example, selection comprises a two-step process of: identifying an issue that is likely causing a detected deviation in a state of the industrial system; and identifying at least one control action known to resolve or otherwise mitigate the identified issue. Secondly, the impact of each mitigating control action is calculated, so a result of performing each of the mitigating control actions on the industrial system can be determined. This calculation can then be used to prioritize the control actions. An example system for performing method 400 is shown in Figure 2.

Method 400 comprises step 402, step 404, step 406, step 408, and step 410. Step 402 comprises selecting one or more mitigating control actions from a plurality of predetermined control actions; step 404 comprises identifying an issue from a plurality of predetermined issues causing a deviation; step 406 comprises identifying one or more control actions based on the identified issue; step 408 comprises calculating an impact of each mitigating control action on the industrial system; and step 410 comprises prioritizing the one or more mitigating control actions.

Step 402 comprises selecting one or more mitigating control actions from a plurality of predetermined control actions, wherein each predetermined control actions represents a predetermined operation to change one or more processes of the industrial system. Selecting one or more mitigating control actions is a technical knowledge-based process, wherein issues associated with the industrial system are known to result in one or more changes to the one or more processes of the industrial system. Similarly, changes to one or more processes of the industrial system can therefore be associated to at least one predetermined issue. Therefore, selecting one or more mitigating control actions is based on historical and a priori knowledge of how to change the one or more processes of the industrial system, such as to mitigate an undesired effect of a detected deviation.

Step 404 comprises identifying an issue from a plurality of predetermined issues causing a deviation, wherein identifying an issue, from a plurality of predetermined issues, as causing the deviation is based on the assessed effect of the deviation. The plurality of predetermined issues is stored in a corrective action database, and includes issues related to the processes, equipment, environment, resources, and/or operation of the industrial system. Each issue is linked to at least one control action in a one-to-one, many-to-one, or one-to-many relationship.

Step 406 comprises identifying one or more control actions from the plurality of predetermined control actions based on the identified issue causing the deviation, wherein the one or more identified control actions are selected to reduce the effect of the deviation of the one or more outputs of the industrial system. The control actions represent operations that, once initiated and/or performed, cause a change in the one or more processes of the industrial system as to mitigate the deviation.

Step 408 comprises calculating an impact of each mitigating control action on the industrial system, based on calculating one or more impact values from a plurality of impact values comprising any of: production measures, operational measures, environmental measures, safety measures, or efficiency measures. The one or more impact values are combined to form a total calculated impact for each mitigating control action, such as by weighting each impact value based on the specific process and/or component of the industrial system. The weighted impact values can then be summed, multiplied, averaged, or mathematically combined using other standard methods. Weighting the impact values results in a tailored final impact, such as a tailored total impact for each deviation type, each process of the industrial system, each component of the industrial system, each operating of the focus of the industrial system, e.g. preserving water during a drought, and/or each industrial system. Optionally, step 408 is tailored to a specific state value, such as the state value associated with a detected deviation e.g. the detected deviation of step 404.

Step 410 comprises prioritizing the one or more mitigating control actions, such as prioritizing based on which mitigating control action was calculated to have the biggest impact on mitigating the deviation or otherwise improving the performance of the industrial system e.g. as performed in step 408. Optionally, step 410 is not performed, such as when only one mitigating control action is selected and/or suitable.

Beneficially, method 400 results in a user of the user interface, such as an operator of the industrial system, being provided with the most relevant information and associated data for rapid and efficient determination of whether to perform an operation to change one or more processes of the industrial system, helping to optimize performance of the industrial system with up-to-date and relevant operation recommendations.

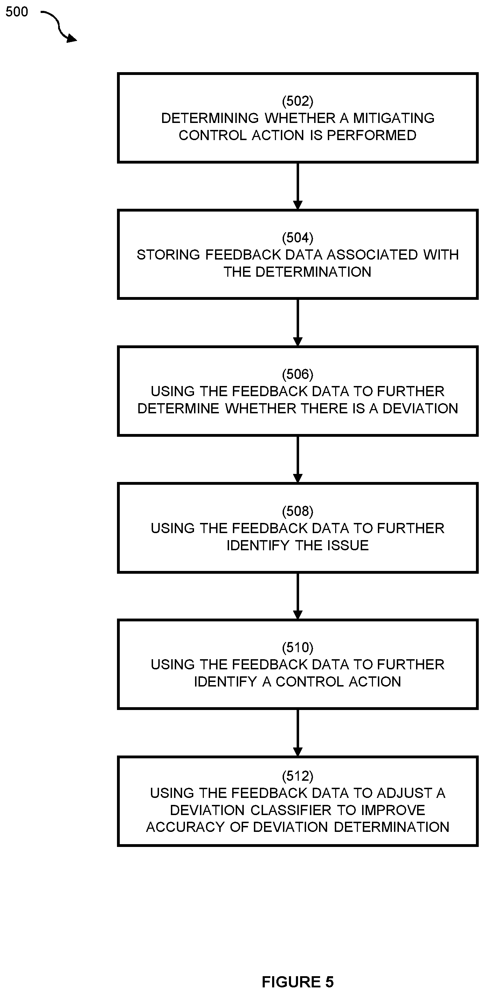

Figure 5 shows a flowchart illustrating a method for improving the selection of one or more mitigating control actions based on feedback data. Specifically, Figure 5 illustrates a computer-implemented method 500 compatible with the processes of methods 100, 400, 600, 800, 900, and/or 1000.

Figure 5 represents method 500, which is a process for improving method 100 and/or method 400 and/or operation support system 200. The process involves determining and storing whether a selected mitigating control action is performed, such as whether an operator of the industrial system initiates the mitigating control action. This information can then be used to improve deviation detection and analysis. An example system for performing method 500 is shown in Figure 2.

Method 500 comprises step 502, step 504, and one or more of any of step 506, step 508, or step 510. Step 502 comprises determining whether a mitigating control action is performed; step 504 comprises storing feedback data associated with the determination; step 506 comprises using the feedback data to further determine whether there is a deviation; step 508 comprises using the feedback data to further identify the issue; step 510 comprises using the feedback data to further identify a control action; and step 512 comprises using the feedback data to adjust a deviation classifier to improve accuracy of deviation determination.

Step 502 comprises determining whether a mitigating control action is performed, such as the selected mitigating control action of method 400. Determining whether a mitigating control action is performed comprises determining whether a mitigating control action is initiated, is in progress, or has been completed. The determination can be made based on data collected from one or more sensors of the industrial system or based on an input from an operator of the industrial system.

For example, a user of the user interface confirms whether the user initiated the selected control action. In another example, the user of the user interface confirms whether the suggested issue and/or control action is relevant to the deviation and/or operation of the industrial system. Alternatively, user input is not required, such as if the selected control action is not relevant or not the current best course of action for an operator and the operator of the industrial system initiates a different action, or no control action, e.g. performing manual readjustment. In this example, the determination is therefore that the mitigating control action was not performed.

Step 504 comprises storing the feedback data associated with the determination. The feedback data consists of any relevant data, such as the data used to perform step 502, e.g. the user input or the data collected from the one or more sensors. Optionally, storing the feedback data comprises labelling the selected control actions, such as whether a control action is relevant or not relevant, whether an associated issue was relevant, such as the cause of a deviation, or not relevant, such as not the cause of a deviation, and/or whether the deviation was relevant or not relevant.

Step 506 comprises using the feedback data to further determine whether there is a deviation. For example, if feedback data shows that the deviation was not relevant, the predetermined threshold associated with that deviation is adjusted to prevent irrelevant deviation detection. Further determining whether there is a deviation further comprises determining whether there is a new deviation in new reference data, which is now more a more reliable determination, such as by performing step 104 of method 100.

Step 508 comprises using the feedback data to further identify the issue. Further identification of an issue comprises adjusting how issues are associated with calculated impacts of the deviation, such as by incorporating further proposed issues and the associated impact on the industrial system, or altering how impacts are calculated, such as by adjusting weightings applied to specific impact values. Further identification further comprises identifying a new issue based on a new deviation, such as by performing step 106 of method 100 and/or step 406 of method 400.

Step 510 comprises using the feedback data to further identify a control action. Further identification of a control action comprises adjusting how issues and control actions are linked or otherwise associated in the corrective action database. For example, alternative control actions can be linked to a previously detected issue based on the feedback data.

Further identification further comprises identifying a new control action based on a new issue, such as by performing step 106 of method 100 and/or step 408 of method 400.

Step 512 comprises updating at least one deviation classifier based on the feedback data and/or using the feedback data as a further input to the deviation classifier. Optionally, step 512 is comprised within step 506, wherein adjusting a predetermined threshold comprises updating the associated deviation classifier.

Incorporating the processes of method 500 into, for example, method 100 or operation support system 200 results in a feedback loop for continuous improvement of operation recommendations, enabling an accurate, reliable, and fine-tuned process for specific processes, components, or operations of the industrial system.

In order for the operation decision support detailed above in reference to Figures 1 to 5 to be accurately and reliably applied to predicting future deviations based on reference data associated with a predicted future performance of the industrial system, a future performance of the industrial system must be accurately and reliably predicted. Figures 6-11 detail performance prediction methods and/or system for predicting system performance using a combination of a trained machine learning model, a prediction model, and a continuous learning loop. Inclusion of a trained machine learning model results in an accurate prediction based on historical data associated with the industrial system. Inclusion of the prediction model results in an updated prediction based on real-time data associated with the industrial system. The continuous learning loop results in the predictions being continually improved or otherwise adjusted to more closely match the measured future performance of the industrial system.

Figure 6 shows a flowchart illustrating a method for predicting system performance of an industrial system. Specifically, Figure 6 illustrates a computer-implemented method 600 compatible with the processes of methods 100, 400, 500, 800, 900, and/or 1000.

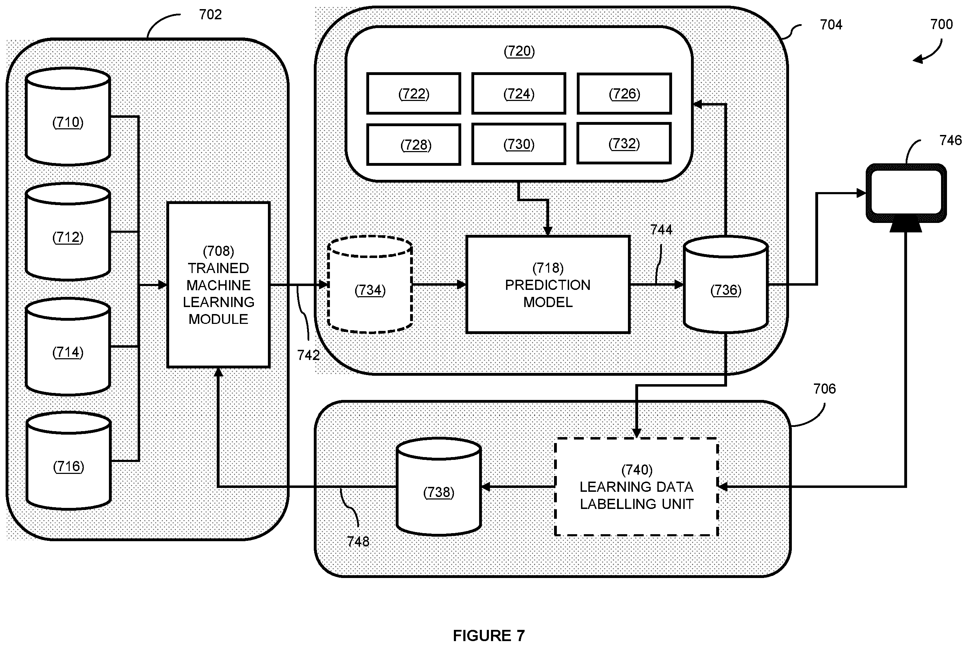

Figure 6 represents method 600, which is a process for predicting how one or more processes of the industrial system will develop or change in the future. Each state value, such as the state values described above in reference to method 100, has a dedicated prediction process. The process uses a mixture of trained machine learning output and real-time data for increased explainability and a built-in learning loop for increased reliability. Method 600 therefore represents an explainable and reliable process for predicting system performance of the industrial system, which is used for, for example, monitoring the industrial system and/or by an operator of the industrial system for decision support purposes. An example system for performing method 600 is shown in Figure 7.

Method 600 comprises step 602, step 604, step 606, and step 608. Step 602 comprises obtaining a first state value from a trained machine learning model; step 604 comprises obtaining real-time system information comprising data collected from a set of sensors of the industrial system; step 606 comprises determining a second state value using a prediction model using the first state value and the real-time system information; and step 608 comprises updating the trained machine learning model.

Step 602 comprises obtaining a first state value from a trained machine learning model, wherein the trained machine learning model predicts, based on a performance of the industrial system over a first time period, the performance of the industrial system over a second time period. The performance of the industrial system over the first time period is determined using data collected at the first time period from a set of sensors of the industrial system. The first state value of the system is associated with the predicted performance of the industrial system over the second time period and is indicative of a future state of the industrial system.

For example, the trained machine learning uses historical data associated with the industrial system in order to predict a future performance of the industrial system. The trained machine learning is dedicated to a particular state value, and therefore is trained to output one or more specific state values. The input data corresponds to the first state value, wherein different state values from different trained machine learning models use the same or different input data, depending on the output state value. Alternatively, a single trained machine learning model is configured to predict a plurality of first state values. The input data comprises data collected at the first time period from a set of sensors of the industrial system, which is indicative of historical states of the industrial system; data associated with one or more relevant processes of the industrial system, data associated with one or more relevant components, such as equipment, of the industrial system; and/or data associated with the trained machine learning model, such as model configuration specifications. Additionally, feedback data is input to the trained machine learning model to increase reliability of the obtained outputs.

Step 604 comprises obtaining real-time system information comprising data collected from a set of sensors of the industrial system, such as wherein the real-time system information is indicative of a current state of the industrial system and comprises data collected by the set of sensors of the industrial system. The real-time system information is indicative of a current state of the industrial system, and a current state value is calculated based on data collected by the sensors at a current time period. In addition to data collected by the sensors of the industrial system, the real-time system information comprises data from a variety of sources, depending on the targeted state value for which method 600 is directed towards.

Example real-time data sources comprise process unit programmable logic controllers (PLCs); laboratory devices associated with one or more processes of the industrial system; up-stream data associated with resource availability and operation scheduling; batch progress estimation associated with process cycle durations; output quality and quantity indicators; and other calculated or measured values associated with the industrial system.

Step 606 comprises determining a second state value using a prediction model, wherein the prediction model uses the first state value and the real-time system information to determine a second state value. The first state value obtained in step 602 forms a starting-off point to track targeted properties and/or features of the industrial system, and predict future performance of the industrial system. The real-time system information fine-tunes or otherwise adapts the prediction to more closely match the future state of the industrial system.

For example, for a specific process of the industrial system, such as a process unit in focus and its operation properties, a comprehensive set of sensor and/or actuator values from the process unit PLC is collected. Additionally, available quality data are collected from the various lab devices capable of mirroring data at the PLC level. Furthermore, up-stream data that have an impact on how the unit will behave for predetermined process requirements is also collected. In addition, other calculated data (e.g. virtual sensors for quality measurements) are also input to the prediction model. For batch operations, post-batch values indicative of performance of the industrial system are also used in the prediction process of the current batch. To evaluate the quality of the predictors against actual values, the batch progress state is also input to the prediction model. Based on this obtained real-time system information, the prediction model alters the first state value to account for current impacting factors on the process that could be too variable, unpredictable, or rare to be incorporated into training data for the trained machine learning model of step 602. Beneficially, use of a prediction model results in an increasingly process-specific prediction and a more reliable prediction than a more generalized approach of a trained machine learning model alone.

Step 608 comprises updating the trained machine learning model, such as by: calculating a third state of the system value of the system using data collected from the set of sensors of the industrial system during the second time period, wherein the third state value of the system is associated with the performance of the industrial system at the second time period and is indicative of a state of the industrial system at the second time period; and adjusting the trained machine learning model to reduce the difference between the second state value determined by the prediction model, and the third state value of the system.

The third state value is obtained from the real-time system information or calculated using additional data associated with the performance of the system at the second time period. The third state value represents a measure, non-predicted, state value in which a predicted state value can be compared to, such as the second state value or the first state value. By adjusting the trained machine learning based on the difference between the second state value and the third state value, the whole prediction system is updated such that predicted performance more closely match future measured performance of the industrial system. Method 900 is example process for updating the trained machine learning model.

Preferably, the first time period is before the second time period, such as wherein the first time period is a current and/or historical time period and the second time period is a future time period. For example, the one or more process cycles of the industrial system from a sequence of process cycles occurs within the second time period.

Optionally, the third state value is used to obtain a further first state value from the trained machine learning model, such that method 600 is repeated, as performed in method 800. The third state value is used directly or obtained from storage, wherein the second state value and the third state value are optionally stored for further use as inputs to the trained machine learning model or prediction model and/or use as feedback data.

Calculating a third state value is repeated at predetermined time intervals over the second time period in the event that systematic quality labelling is performed. For example, the second state value is assigned a first quality label and the third state value is assigned a second quality label. Adjusting the trained machine learning model subsequently comprises determining whether the first quality label is consistent with the second quality label. Updating the trained machine learning model is performed remotely or on-site, wherein updating the trained machine learning model is optionally further based on a comparison between a plurality of second state values and a plurality of third state values.

In examples where a plurality of third state values is used for updating the trained machine learning model in step 608, step 608 further comprises filtering the plurality of third state values and determining whether the filtered plurality of third state values meets a predefined criteria, wherein the predefined criteria is associated with the number of filtered out third state values. For example, the plurality of third state values is only used to update the trained machine learning model when there are enough high-quality values to update the trained machine learning model without introducing inaccuracies or, for example, bias. In the event that the predefined criteria is not met, the updating of the trained machine learning model is cancelled such that the trained machine learning model is restored to a pre-updated state, such as the state of the trained machine learning model when the first state value of step 602 was obtained. Additionally or alternatively, if the predefined criteria is not met, step 608 further comprises generating one or more first state values using an alternative model such as a model based on averaging a plurality of filtered third state values.

The trained machine learning model is an artificial narrow intelligence (AVI) model, e.g. configured for the specific first state value, or an artificial general intelligence (AGI) model, e.g. configured to predict the future performance of the industrial system on a broader scale. Preferably, the trained machine learning model of step 602 is one of a plurality of trained machine learning models, wherein each state value associated with a particular component or process of the industrial system corresponds to a particular trained machine learning model. For example, the plurality of trained machine learning models comprises any of a linear multivariable regression model, a polynomial regression model, a random forest regression model, a neural network model, or an expert model, and step 602 comprises: receiving a focus indicator of a plurality of focus indicators, wherein each focus indicator is associated with a component, a process, an input, or an output of the industrial system; and selecting the trained machine learning model from the plurality of trained machine learning models based on the focus indicator.

Optionally, inputs to the trained machine learning model and/or the prediction model comprise information associated with a component, a process, an input, or an output of the industrial system, and/or data collected by the set of sensors of the industrial system comprising any of: temperature data, humidity data, pressure data, consumption data, process rates, or operating conditions of the industrial system.

For an example implementation of method 100, sensor and actuator data, historical data, product recipe data, equipment design specification data, and model design specifications such as a process know-how-based specification for determining a model type, e.g. a gray-box model, are used to train a representation of a certain behavior of the process, e.g. filtration time or process heat efficiency, represented by a state value. Depending on the nature of the state value in question, one of the following modeling approaches are used: linear multivariable regression model, polynomial regression models, random forest regression models, neural network models, and/or expert models, which are expert defined manual models, linear or non-linear.

To fit the one or more trained machine learning models that are optionally gray-box models, a mathematical expression, *f*, is specified for a state value, y, with a specified input variables/features, x, and parameters, p.

$$y = f(x,p)$$

Input variables/features can be upstream data, e.g. associated state values, setpoints, and/or process variables, and historic data, e.g. historical state values, setpoints, and process variables, for the focused targeted process(es) associated with the state value y. All the above referenced data is stored in a central database of an edge device.

Using a target value of the state value for the time of the prediction, which is typically the final batch value of the state value, and the value of input variables, the parameters of the model are fitted by minimizing the least square error or other standard mathematical approach to fit an error of the expected target value compared to the model output value. Preferably, the trained machine learning model is non-linear, which means a numerical iterative method must be used. A non-limiting example of this is "Gradient Descent Optimization". However, any optimization is optionally used to fit the model using the least square error as the objective function. In the case of linear models, an analytical solution can be found.

During the tuning of the model, data is filtered based on quality such as missing data (gaps in the data) for a batch, or the data such as the state value is faulty based on the state of processes and/or problems in the data processing. In the case of faulty and/or bad quality data, wherein the tuning algorithm does not have enough data, the model fitting is cancelled for the current state value y, and adjusting the model is ended, and/or next state value prediction is fitted/tuned instead. A predefined criterion is used to ignore the fitted model and use a fallback strategy, such as a model based on an average state value that is then fitted and used in the real-time data processing algorithm.

The mathematical expression, and what inputs to use and parameter values, are stored in a database, and is associated with the specific state value y that the model should be used for. This state value might refer to a specific recipe and/or specific process.

Another example gray-box model is a hybrid model, using a combination of a known mathematical expression with input variables/features and parameters while also using a black-box layer to estimate parameters values from the same and/or additional input variables/features. Example black-box models include neural networks, random forest and/or polynomial regression models. To fit the black-box model, no process expertise/know-how is needed, and, for example, a standard deep learning algorithm is used to find the input features/variable automatically from upstream data and historic data for the relevant process.

In one example, the black box model comprises processes of filtering data, such as removing bad ranges of the whole dataset if e.g. the batch data is bad because of missing data/gaps in batches or a state value is bad/faulty based on the state of processes and/or problems in the data processing. The best fit of the selected model is determined using the currently selected input/features. The selected black-box model optionally has setup related parameters. For example, a neural network model needs specifications such as number of layers, number of neurons/nodes of layers, and activation model, and a random forest (random decision forests) model requires information such as depth number, number of estimators, or tuning algorithm specification. Setup related parameters are stored in a database and associated with the specific state value. Preferably, cross validation is performed for the model and the data to analyze the fit. Based on this analysis, a predefined criterion is used to ignore the fitted model and use a fallback strategy as previously disclosed. For some black-box model types, the most significant features/inputs are determined from the tuning, such as when the model is a linear regression model and/or a random forest model. Using this determination, features are selected based on a criterion and the model is subsequently refitted using the new selection of the features until all features pass the criterion. The mathematical expression, and what inputs to use and parameter values, are stored in a database referring to the assigned state value which the model should be used for. This state value preferably represents a specific recipe and/or specific process.

The trained machine learning model, and the associated parameters, are used as starting point to track the designed properties and predict their future behavior in real-time. To do this for a given process unit in focus and its operation properties, a comprehensive set of sensors and actuators values from a unit PLC is collected. In addition, available quality data are collected from the various lab devices or mirrors data at the PLC level. Furthermore, up-stream data that have an impact on how the unit will be behave for the given recipe is also collected. In addition, other calculated data (e.g. virtual sensors for quality measurements) are also input to the prediction model. For batch operations, post-batch state values are used in the prediction process of the current batch. To evaluate the quality of the predictors against actual values, the batch progress state is input to the prediction model.

All predicted values are stored, and the user interface is updated with the latest values. To improve the quality and reliability of the predictions, a periodic quality check is performed for each state value. Results are stored with a snapshot of the related input values, and necessary updates of the trained machine learning model and/or the training associated with the trained machine learning model is performed manually (in the cloud) by subject matter experts. The feedback is based on systematic sampling of the quality of the state values. The sampling is a manual labeling of the state value for its quality by the lead operator. The sampling is based on a fixed/variable frequency for certain processes or batches of a production to cover a representative quality sampling of the prediction quality.

The format or type of the data used by the trained machine learning model and/or the prediction model depends on the live evaluation the trained machine learning model and/or the prediction model. In an example comprising live evaluation, some values are constant and other variable/time-dependent within the real-time system information. Considering a trained machine learning model for the above-described occupation example, further related to a mash tun process:

$$[Total\ Occ.\ Time\ Mash\ Tun]$$
$$= a0 * [Progress] + a1 * [Sequence\ Step] + a2 * [Malt\ Load] + a3 * [Avg.\ Heat$$
$$- Up\ Rate]$$

The above prediction uses a multi-variable linear model. PLC data (obtained from PLC storage, collected by different PLC protocols and OPC) and internal live calculations (obtained from RAM storage) are real-time time-dependent values/data being the sequence step and the avg. heat-up rate, respectively. Up-stream data (obtained from database storage), post-/historic-batch state value data, and laboratory device data (obtained from database storage) are constant values/data. In this example, the malt load is an up-stream value. The batch progress estimate is a real-time time-dependent values/data, being a prediction itself, (stored in RAM memory or database [8]). $a0$, $a1$, $a2$, and $a3$ are tuned parameters for the prediction model.

In an example of tuning the trained machine learning model, input data is structured as vectors/arrays. For tuning the model, a target-value is provided, and not calculated. The following table is an example setup of a dataset (Total samples M, Total batches B, and total number of inputs/features N incl. progress estimate):

| Target Value (Constant final state value or variable progress per batch) | Batch Number /Id | Progress | Input 2 (variable) | Input 3 (constant) | ... | Input N (variable) |
|---|---|---|---|---|---|---|
| Target value 1 | 1 | 0% | 5 | 10 | ... | -10000 |
| Target value 2 | 1 | 1% | 1 | 10 | ... | 2323 |
| Target value 3 | 1 | 2% | 100 | 10 | ... | 123123 |
| ... | 1 | ... | .. | ... | ... | ... |
| Target value 100 | 1 | 99% | 10 | 10 | ... | -2342 |
| Target value 101 | 1 | 100% | 0 | 10 | ... | 53453 |
| Target value 102 | 2 | 0% | 2 | 15 | ... | 123 |
| Target value 103 | 2 | 1% | 10 | 15 | ... | -324234 |
| Target value 104 | 2 | 2% | 4 | 15 | ... | 4234 |
| ... | 2 | ... | .. | ... | ... | ... |
| Target value 250 | 2 | 99% | 130 | 15 | ... | 0 |

(continued)

| Target Value (Constant final state value or variable progress per batch) | Batch Number /Id | Progress | Input 2 (variable) | Input 3 (constant) | ... | Input N (variable) |
|---|---|---|---|---|---|---|
| Target value 251 | 2 | 100% | 3 | 15 | ... | 32 |
| ... | ... | ... | ... | ... | ... | ... |
| Target value M-1000 | B | 0% | 8 | 12 | ... | 234 |
| Target value M-999 | B | 1% | 10 | 12 | ... | 423424 |
| Target value M-998 | B | 2% | 34 | 12 | ... | 0 |
| ... | B | ... | .. | ... | ... | ... |
| Target value M-1 | B | 99% | 23 | 12 | ... | 123 |
| Target value M | B | 100% | 1 | 12 | ... | 123 |

Example 1. Dataset directed to prediction of Total Occupation Time of Mash Tun:

| Total occupation time [minutes] (Constant final value for batch) | Batch Number/Id | Progress | Sequence step (variable) | Malt Load (constant ) | ... | Avg. Heat-up rate (variable) |
|---|---|---|---|---|---|---|
| 123 | 1 | 0% | 1 | 10000 | ... | 0.5 |
| 123 | 1 | 1% | 1 | 10000 | ... | 0.2 |
| 123 | 1 | 2% | 2 | 10000 | ... | 0.8 |
| ... | 1 | ... | .. | ... | ... | ... |
| 123 | 1 | 99% | 50 | 10000 | ... | 0.4 |
| 123 | 1 | 100% | 51 | 10000 | ... | 0.4 |
| 130 | 2 | 0% | 1 | 13000 | ... | 0.5 |
| 130 | 2 | 1% | 1 | 13000 | ... | 0.1 |
| 130 | 2 | 2% | 1 | 13000 | ... | 0.9 |
| ... | 2 | ... | .. | ... | ... | ... |
| 130 | 2 | 99% | 49 | 13000 | ... | 0.5 |
| 130 | 2 | 100% | 51 | 13000 | ... | 0.5 |
| ... | ... | ... | ... | ... | ... | ... |
| 110 | B | 0% | 1 | 11000 | ... | 0.4 |
| 110 | B | 1% | 2 | 11000 | ... | 0.05 |
| 110 | B | 2% | 2 | 11000 | ... | 0.4 |
| ... | B | ... | .. | ... | ... | ... |
| 110 | B | 99% | 50 | 11000 | ... | 0.6 |
| 110 | B | 100% | 51 | 11000 | ... | 0.6 |

Example 2. Dataset directed to prediction of Progress of Mash Tun:

| Target Value (Progress) | Batch Number/Id | Sequence step (variable) | Malt Load (constant) | ... | Avg. Heat-up rate (variable) |
|---|---|---|---|---|---|
| 0% | 1 | 1 | 10000 | ... | 0.5 |
| 1% | 1 | 1 | 10000 | ... | 0.2 |
| 2% | 1 | 2 | 10000 | ... | 0.8 |
| ... | 1 | .. | ... | ... | ... |
| 99% | 1 | 50 | 10000 | ... | 0.4 |
| 100% | 1 | 51 | 10000 | ... | 0.4 |
| 0% | 2 | 1 | 13000 | ... | 0.5 |
| 1% | 2 | 1 | 13000 | ... | 0.1 |
| 2% | 2 | 1 | 13000 | ... | 0.9 |
| ... | 2 | .. | ... | ... | ... |
| 99% | 2 | 49 | 13000 | ... | 0.5 |
| 100% | 2 | 51 | 13000 | ... | 0.5 |
| ... | ... | ... | ... | ... | ... |
| 0% | B | 1 | 11000 | ... | 0.4 |
| 1% | B | 2 | 11000 | ... | 0.05 |
| 2% | B | 2 | 11000 | ... | 0.4 |
| ... | B | .. | ... | ... | ... |
| 99% | B | 50 | 11000 | ... | 0.6 |
| 100% | B | 51 | 11000 | ... | 0.6 |

Typical input and output values for the trained machine learning model and component algorithms are floats, and typically not limited to possible values. Only state values associated with a progress (target value or predictor) is limited between 0-100%.

For expert-based models, all real-time system information is essential both for tuning and live evaluation. The algorithm stops tuning or does live evaluation if specific data is not available. For black-box models, all available data for the process unit is optional as the tuning algorithm of the above examples does feature selection, independent of expert analysis. The data/inputs are available during live evaluation or else the prediction is stopped and/or cancelled.

Preferably, multiple batches/runs are included in the training dataset for the trained machine learning model to result in a more general understanding of the process behavior, such as a minimum of 3 batches for statistical calculations and tuning of an algorithm, as the dataset for each batch consists of multiple time-samples through the batch, such as a sample frequency every 10 seconds. For example, for a state value prediction tuning using data for 3 batches where the batch duration is 2 hours and uses 10 inputs/features, and the data is ideal (no filtered data), the estimated data amount would be:

$$[batch\ number] * [batch\ duration] * [sample\ frequency] * ([number\ of\ inputs] + 1)$$

$$= 3 * 2 * 60 * (60/10) * (10 + 1)$$

= 23760 datapoints or a dataset of 2160 rows and 11 columns (10 inputs and 1 target value).

Example of data pre-processing steps performed during method 100 include any of: selection of batch data (sensor values, logic/automation values, setpoints, state values) for relevant process, e.g., the mash tun in the above example (all non-batch related data is removed); finding batch indices/numbers inside the current dataset, then attaching all data from upstream processes (setpoints and state values) with the same batch id/numbers, wherein the up-stream data is set as constant values for the individual batches and, in the above example, this would be the mill and the mill malt hopper; create a column for progress, which is a linear interpolation of 0-1 in time between batch start and end and, optionally, is the target value or an additional input/predictor; create a target value column, which, for each batch, contains the target value, wherein, for a state value prediction, the target value is a constant value of the final value of the state value for the batch and for a progress prediction, the target value is a time-dependent value of 0-1 for the batch based on the relative time as stated above; selection of features/inputs (columns), such as, in the black-box example, multiple interactions of the tuning are done based on a feature-selection algorithm (threshold of input/feature significance) where some columns will be excluded from the dataset and, in the expert model example, only the specified features/inputs are included beside the target value (specified in database for state value-recipe combination); removing any rows containing nan in any of the columns and checks on the dataset's quality (row numbers and batch number), wherein the algorithm is stopped if quality is too bad; or K-Fold and other types of splits of data (training/testing sets). Preferably, this is including in the tuning and evaluation algorithm.

Optionally, real-time system information is stored in a database and/or RAM memory, and method 100 further comprises database connection, such as database query, processes. The first state value, second state value, and third state value, and any associated calculated values, are stored in RAM memory and/or local storage for recovery purposes. PLC data such as sensory, logic, or automation values, is stored in PLC, with values read by various standard means based on communication protocols of the industrial system.

Figure 7 shows a high-level system architecture diagram in accordance with the present disclosure for predicting system performance of an industrial system. Specifically, Figure 7 illustrates a performance prediction system 700 configured for performing method 600 and directed towards predicting state values indicative of a future state of the industrial system.

Performance prediction system 700 comprises a static prediction unit 702, a dynamic prediction unit 704, a learning unit 706. The static prediction unit 702 comprises a trained machine learning model 708 and inputs to the trained machine learning model 708 such as historic data 710, process data 712, component data 714, and model specification data 716. The dynamic prediction unit 704 comprises a prediction model 718 and real-time data 720. The real-time data 720 comprises data from multiple sources such as a process unit PLC 722 and laboratory devices 724, and comprises data such as up-stream data 726, batch progress estimations 728, post-batch state values 730, and/or calculated state values 732. The dynamic prediction unit 704 optionally further comprises stored data obtained from the static prediction unit, static prediction data 734. Additionally, the dynamic prediction unit 704 stores the output from the prediction model 718 as dynamic prediction data 736. The learning unit 706 comprises feedback data 738 and, optionally, a learning data labelling unit 740.

The static prediction unit 702 and dynamic prediction unit 704 operate in combination for accurate and reliable site-specific, process-specific, component-specific, and/or state value-specific predictions. For example, the static prediction unit 702 is configured for offline design and tuning, wherein the static prediction unit 702 is serviced and/or updated off-site, such as by machine learning specialists or a tuning algorithm. The dynamic prediction unit 704 is configured to be site-specific. Beneficially, the combination of off-site and on-site prediction units allows for a larger pool of training data, such as from multiple processes, being used for the trained machine learning model 708, wherein the training data can be subject to supervised data cleaning and processing methods. Additionally, impacts of updating the trained machine learning model 708 can be analyzed before the trained machine learning model 708 is implemented in monitoring the industrial system. The on-site prediction model 718 then transforms the first state value 742 from a more generic future prediction into a real-time tailored future prediction by combining the first state value 742 with real-time data 720 to output a second state value 744. The second state value 744 is optionally stored as dynamic prediction data 736.

The dynamic prediction data 736 is optionally output to a user interface 746, enabling a user of the user interface, such as an operator of the industrial system, to select an operation to change one or more processes of the industrial system based on the second state value 744. Alternatively or additionally, the dynamic prediction data 736 is used by the learning unit 706 to update the trained machine learning module 708. For example, a third state value 748 is calculated at the learning data labelling unit 740 based on data collected from the set of sensors of the industrial system. The third state value 748 is associated with the performance of the industrial system during the time period associated with the second state value 744, and is stored with or without the second state value 744 as feedback data 738.

Optionally, data associated with the third state value 748 and the second state value 744 is stored as feedback data 738, and/or the difference between the third state value 748 and the second state value 744. The trained machine learning module 708 is adjusted to reduce the difference between the second state value 744 and the third state value 748. Optionally, the third state value 748 is an input to the static prediction unit 702, such as in combination with historic data 710, and/or an input to the dynamic prediction unit 704, e.g. where the third state value 748 is comprised within the real-time data 720. Beneficially, use of the third state value 748 as real-time data 720 efficiently updates the dynamic prediction unit 704 such that the second state value 744 is more accurate and reliable due to a continuously updating performance prediction system 700. Further beneficially, use of the third state value 748 to update the static prediction unit 702 results in a continuous learning loop, wherein the performance prediction system 700 is improved over time.

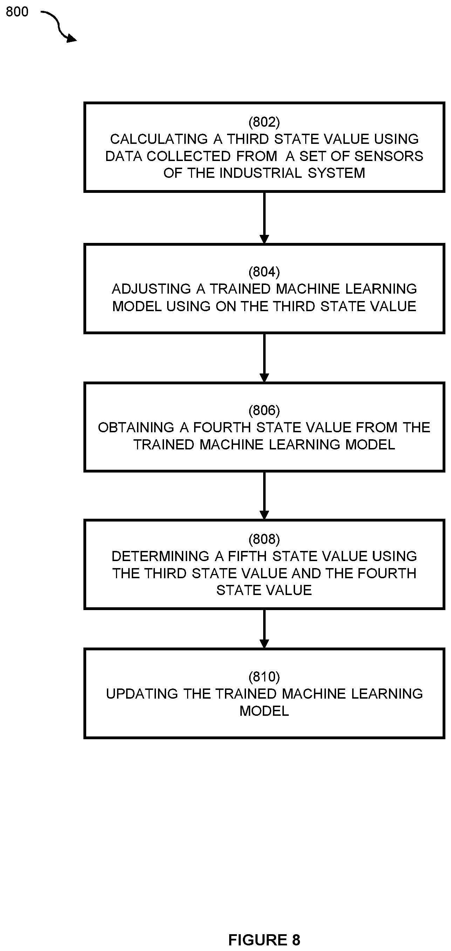

Figure 8 shows a flowchart illustrating a method for updating a trained machine learning model configured to predict performance of an industrial system based on data collected from a set of sensors of the industrial system. Specifically, Figure 8 illustrates a computer-implemented method 600 compatible with the processes of methods 100, 400, 500, 600, 900, and/or 1000.

Figure 8 represents method 800, which is a process for performing a continuous learning loop to further predict performance of an industrial system, wherein the further prediction is a more accurate and/or reliable prediction indicative of a future state of the industrial system, and repeating the method of 600 to form a continual monitoring process of an industrial system. An example system for performing method 800 is shown in Figure 7.

Method 800 comprises step 802, step 804, step 806, and step 808. Step 802 comprises calculating a third state value using data collected from a set of sensors of the industrial system; step 804 comprises adjusting a trained machine learning model using on the third state value; step 806 comprises obtaining a fourth state value from the trained machine learning model; step 808 comprises determining a fifth state value using the third state value and the fourth state value; and step 810 comprises updating the trained machine learning model.

Step 802 comprises calculating a third state value of the system using data collected from the set of sensors of the industrial system during the second time period, wherein the third state value of the system is associated with the performance of the industrial system at the second time period and is indicative of a measured state of the industrial system at the second time period. For example, step 802 comprises determining, at a future time point, the state of the industrial system so that a previously obtained predicted state of the industrial system for the same future time point can be compared.

Step 804 comprises adjusting the trained machine learning model to reduce the difference between the second state value determined by the prediction model and the third state value of the system. For example, step 804 comprises using the third state value as an input to the trained machine learning model to result in more accurate and reliable output predictions from the trained machine learning. In another example, step 804 comprises using the third state value as additional training data for the third state value to result in more accurate and reliable output predictions. In a further example, step 804 comprises the mathematical processes, parameters, or hyperparameters of the trained machine learning model being altered, such as by a machine learning specialist off-site or a tuning algorithm, based on the difference between the third state value and the second state value.

Step 806 comprises obtaining a fourth state value of the system from a trained machine learning model, wherein the trained machine learning model predicts, based on a performance of the industrial system over a new current time period, the performance of the industrial system over a further future time period. The performance of the industrial system over the new current time period is determined using data collected at the current time period from a set of sensors of the industrial system. For example, the fourth state value is obtained based on the third state value of step 802. The fourth state value of the system is associated with the predicted performance of the industrial system over a new future time period occurring after the time period when the third state value was calculated, and is therefore indicative of a future state of the industrial system.

Step 808 comprises determining a fifth state value of the system using a prediction model configured to predict the performance of the industrial system at the new future time period based on the fourth state value of the system and the real-time system information, which optionally includes the third state value of step 802. For example, the fourth state value is adjusted using recently measured data and associated values, such as the calculated third state value, to form a fifth state value. The fifth state value is therefore an updated and more reliable prediction of the new future state of the industrial system.

Step 810 comprises updating the trained machine learning model, which is an optional further step. Updating the trained machine learning model comprises calculating a sixth state value, which is equivalent to a new third state value, using data collected from the set of sensors of the industrial system and adjusting the trained machine learning model to reduce the difference between the fifth state value determined by the prediction model and the calculated sixth state value of the system. For example, step 810 is a repeat of step 802 and 804 at a new future time period. Preferably, as the process of the industrial system progresses, method 800 is continually repeated at systematic time intervals in a cycle that continuously updates and improves the predictions of the trained machine learning model and/or the prediction model.

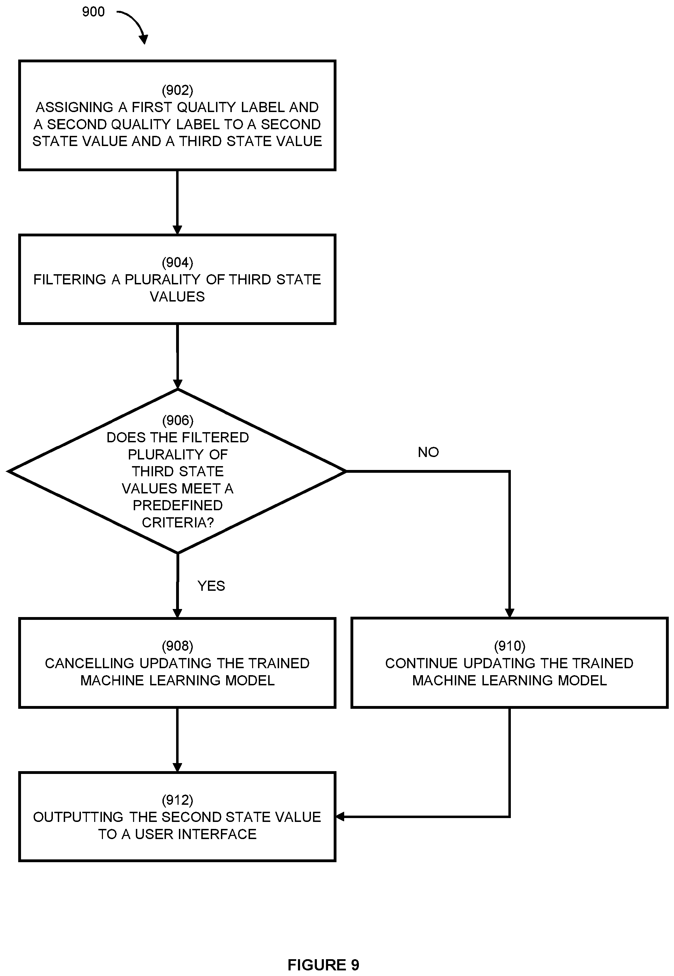

Figure 9 shows a flowchart illustrating a method for using quality labelling in updating a trained machine learning model configured to predict performance of the industrial system. Specifically, Figure 9 illustrates a computer-implemented method 900 compatible with the processes of methods 100, 400, 500, 600, 800, and/or 1000. For example, method 900 is performed between step 802 and step 804 of method 800.

Figure 9 represents method 900, which is a process for applying quality labels to predicted state values for use in updating the trained machine learning model and determining whether the available data is high enough quality to be used in updating the trained machine learning model. An example system for performing method 900 is shown in Figure 7.

Method 900 comprises step 902, step 904, step 906, step 908 or step 910, and step 912. Step 902 comprises assigning a first quality label and a second quality label to a second state value and a third state value; step 904 comprises filtering a plurality of third state values; step 906 comprises determining whether the filtered plurality of third state values meet a predefined criteria; step 908 comprises cancelling updating the trained machine learning model; step 910 comprises continue updating the trained machine learning model; and step 912 comprises outputting the second state value to a user interface. The second state value and the third state value refer to a predicted state value and a calculated and/or measured state value such as the second state value and third state value of method 600 and method 800.

Step 902 comprises assigning a first quality label and a second quality label to a second state value and a third state value. The first quality label is indicative of the quality of the second state value. For example, the first quality label is assigned to the second state value based on the difference between the second state value and the third state value. The first quality label represents a binary label, such as relevant or not relevant, good or bad, and/or correct or incorrect, or the first quality label represents a non-binary label, such as a percentage difference between the second state value and the third state value and/or an opinion of an operator of the industrial system on the quality of the second state value. The second quality label is indicative of the quality of the third state value. For example, the third state value is calculated based on data collected from a set of sensors of the industrial system. If the calculation and/or data collected from the set of sensors is below a quality threshold or otherwise erroneous and/or anomalous, the third state value is assigned a second quality label indicative of a poor quality third state value. Optionally, only the second state value is assigned a first quality label or only the third state value is assigned a second quality label.

Step 904 comprises filtering a plurality of third state values, such as filtering each third state value of a plurality of third state values based on the assigned second quality label of each third state value. Alternatively, step 904 is performed before step 902, wherein the plurality of third state values is filtered and the filtered third state values are subsequently assigned a second quality label. The third state values and/or data associated with the third state values is filtered based on quality. The data associated with the third state values comprises data collected from one or more sensors of the industrial system. Quality is assessed based on multiple factors, such as missing data (gaps in the data) for a batch, or whether the third state value is faulty/bad based on the state of processes and/or problems in data processing.

Step 906 comprises determining whether the filtered plurality of third state values meet a predefined criteria. The predefined criteria depends on the quality label and quality assessment. For example, the predefined criteria is a predefined number of third state values within the filtered plurality of third state values. In the event that data quality is low, a tuning algorithm, or e.g. a machine learning specialist, does not have sufficient amount of data to accurately and/or efficiently update the trained machine learning model of method 600. For example, updating the trained machined learning model with small amounts of data can introduce bias or inaccuracies.

Step 908 comprises cancelling updating the trained machine learning model. For example, the trained machine learning model fitting based on the filtered plurality of third state values is cancelled for the current targeted third state value. Optionally, updating the one or more trained machine learning models is cancelled, wherein the one or more trained machine learning models are not adjusted or are reset back to a previous condition if updating has commenced. Alternatively, updating, fitting, or otherwise tuning the one or more trained machine learning models for a different targeted third state value is continued.

Step 910 comprises continuing to update the trained machine learning model. Continuing to update the trained machine learning model comprises initiating the fitting and/or tuning of at least one machine learning model. Additionally, continuing to update the trained machine learning model comprises tuning the one or more trained machine learning models for a different targeted third state value.

Step 912 comprises outputting the second state value to a user interface. Step 912 is optional. Alternatively, steps 906, 908 and/or 910 are repeated. Optionally, step 912 further comprises outputting one or more filtered third state values to the user interface corresponding to the second state value, allowing a user of the user interface to compare the second state value to the corresponding third state value. Additionally, the second state value and, optionally, the third state value are subsequently used for selecting one or more control actions to enable a user of the user interface to select an operation to change a process of the industrial system, as detailed in method 1000.

Beneficially, determining whether to update or cancel the update of the trained machine learning model results in only high quality data being used as inputs and/or training data for the trained machine learning model. Method 900 therefore improves the accuracy and reliability of the trained machine learning model, as the continuous learning cycle cannot result in a degradation of the trained machine learning model, and data unsuitable for training the trained machine learning model, such as data associated with one-off variations in measurements or inaccurate sampling, does not impact the trained machine learning model.

Figures 10A-10B show a flowchart illustrating a method for automated monitoring of an industrial system and generation of operation recommendations for the industrial system. Specifically, Figures 10A-10B illustrate a computer-implemented method 1000 compatible with the processes of methods 100, 400, 500, 600, 800, and/or 900.

Figures 10A-10B represents method 1000, which is a process for predicting one a state value indicative of a future state of the industrial system and, based on the predicted state value, determining whether there is a deviation associated with the predicted state value and selecting one or more mitigating control actions to reduce the impact of the deviation. An example system for performing method 1000 is shown in Figure 2, Figure 7, and Figure 11.

Method 1000 comprises step 1002, step 1004, step 1006, step 1008, step 1010, step 1012, step 1014, step 1016, step 1018, step 1020, and step 1022. Step 1002 comprises obtaining a first state value from a trained machine learning model; step 1004 comprises obtaining real-time system information comprising data collected by a set of sensors of the industrial system; step 1006 comprises determining a second state value using a predicting model; step 1008 comprises determining whether a deviation is present using the second state value; step 1010 comprises assessing the effect of the deviation; step 1012 comprises selecting one or more mitigating control actions; step 1014 comprises assessing a difference in performance of the industrial system; step 1016 comprises determining an issue casing the deviation based on the assessment; step 1018 comprises identifying one or more control actions based on the issue; step 1020 comprises prioritizing the one or more mitigating control actions; and step 1022 comprises outputting a visual representation.

Step 1002 comprises obtaining a first state value from a trained machine learning model, such as by performing step 602 of method 600. The trained machine learning model predicts, based on a performance of the industrial system over a first time period, the performance of the industrial system over a second time period. The performance of the industrial system over the first time period is determined using data collected at the first time period from a set of sensors of the industrial system. Additionally, the first state value of the system is associated with the predicted performance of the industrial system over the second time period and is indicative of a future state of the industrial system.

Step 1004 comprises obtaining real-time system information comprising data collected by a set of sensors of the industrial system, wherein the real-time system information is indicative of a current state of the industrial system and comprises data collected by the set of sensors of the industrial system, such as by performing step 604 of method 600.

Step 1006 comprises determining a second state value using a predicting model using a prediction model configured to predict the performance of the industrial system at the second time period based on the first state value of the system and the real-time system information, such as by performing step 606 of method 600.

Step 1008 comprises determining, using the second state value, whether a deviation greater than a predetermined threshold is present in the predicted performance of the industrial system at the second time period, wherein the predetermined threshold is associated with a process of the industrial system, such as by performing step 104 of method 100.

Step 1010 comprises, in the event that a deviation greater than the predetermined threshold is present, assessing the effect of the deviation on one or more outputs of the industrial system based on a difference between the predicted performance of the industrial system at the second time period and a projected performance of the industrial system without the deviation present, such as by performing step 106 of method 100.

Step 1012 comprises selecting one or more mitigating control actions from a plurality of predetermined control actions, wherein each predetermined control actions represents a predetermined operation to change one or more processes of the industrial system, such as by performing step 108 of method 100.

Step 1014 comprises assessing a difference between the real-time performance of the industrial system and the performance of the industrial system over the first time period, such as by performing step 402 and 404 of method 400.

Step 1016 comprises determining an issue from a plurality of predetermined issues causing the deviation based on the assessed difference, such as by performing step 404 of method 400.

Step 1018 comprises identifying one or more control actions from the plurality of predetermined control actions based on the issue causing the deviation, wherein the one or more identified control actions mitigate the difference between the predicted performance of the industrial system at the second time period and the real-time performance of the industrial system, such as by performing step 406 of method 400.

Step 1020 comprises prioritizing the one or more mitigating control actions based on calculating an impact of performing each mitigating control action on the industrial system, such as by performing step 410 of method 400.

Step 1022 comprises outputting a visual representation, such as outputting a representation of the impact of performing one or more mitigating control actions to a user interface, such as by performing step 112 of method 100. Beneficially, the visual representation enables a user of the user interface to select an operation to initiate one or more mitigating control actions to change one or more processes of the industrial system.

Optionally, step 1022 further comprises collecting user-feedback regarding the visual representation and associated mitigating control actions. Feedback is used to manually adjust the trained machine learning model and/or prediction model, such as by adjusting hyper parameters, feature selection, and/or the type of model. Collection is preferably automated, such as, if a user-rating associate with the visual representation is too low, the trained machine learning model and/or prediction model will disable the prediction in the user interface and any associated evaluation/tuning.

Beneficially, method 1000 allows for deviations in estimated current state values or predicted future state values to be detected and rectified, or otherwise mitigated, while impacts are minimal or before issues have started to occur. Method 1000 therefore results in an optimized industrial system, with the prediction-based monitoring potentially configured as an early warning system for inefficiencies in equipment or processes. Additionally method 1000 allows for operations to be updated based on changing conditions, variations in the process, and/or equipment deficiencies happening real-time and/or as a result of future processes.

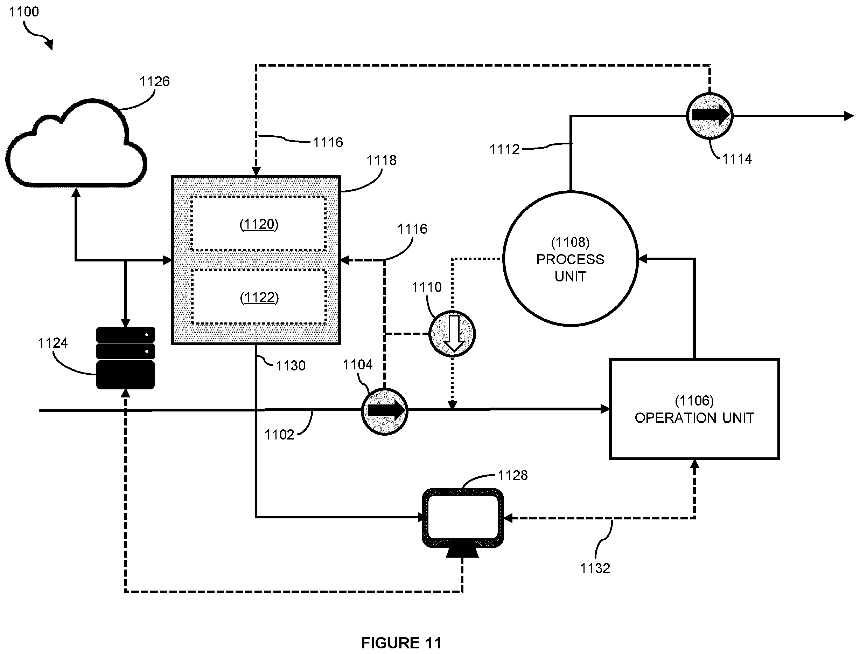

Figure 11 shows a high-level system architecture diagram in accordance with the present disclosure for automated monitoring of an industrial system and generation of operation recommendation for the industrial system. Specifically, Figure 11 illustrates a semi-automated industrial system 1100 configured for performing method 1000 and directed towards monitoring industrial system 1100 by predicting state values indicative of a future state of the industrial system and recommending operations for industrial system 1100 based on the predicted state values.

Industrial system 1100 comprises input resources 1102, a first sensor 1104, an operation unit 1106, a process unit 1108, a second sensor 1110, outputs 1112, a third sensor 1114, data collected by one or more sensors 1116, a monitoring module 1118, a performance prediction system 1120, an operation support system 1122, a corrective action database 1124, an edge-based cloud server 1126, a user interface 1128, an operation recommendation 1130, and a control action 1132.

The monitoring module 1118 obtains a first state value from the performance prediction system 1120, which is optionally performance prediction system 700 of Figure 7. The performance prediction system 1120 comprises the trained machine learning model configured to predict, based on a performance of the industrial system 1100 over a first time period, the performance of the industrial system 1100 over a second time period. The performance of the industrial system 1100 over the first time period is determined using data collected by one or more sensors 1116 at the first time period, wherein the set of sensors comprises the first sensor 1104, second sensor 1110, and/or third sensor 1114. The first state value of the system is associated with the predicted performance of the industrial system 1100 over the second time period and is indicative of a future state of the industrial system 1100. The monitoring module 1118 further obtains real-time system information, wherein the real-time system information is indicative of a current state of the industrial system 1100 and comprises data collected by one or more sensors 1116.

The monitoring module 1118 determines a second state value of the industrial system 1100 using performance prediction system 1120. Performance prediction system 1120 is configured to predict the performance of the industrial system 1100 at the second time period based on the first state value of the system and the real-time system information. Using the second state value, the monitoring module 1118 determines whether a deviation greater than a predetermined threshold is present in the predicted performance of the industrial system at the second time period, wherein the predetermined threshold is associated with a process of process unit 1108.

In the event that a deviation greater than the predetermined threshold is present, the monitoring module 118 assesses the effect of the deviation on one or more outputs 1112 of the industrial system based on a difference between the predicted performance of the industrial system at the second time period and a projected performance of the industrial system without the deviation present. One or more mitigating control actions is subsequently selected by the monitoring module 1118 from a plurality of predetermined control actions, wherein each predetermined control action represents a predetermined operation to change one or more processes of the industrial system.

Selecting one or more control actions is performed by the operation support system 1122 and comprises assessing a difference between the real-time performance of the industrial system and the performance of the industrial system over the first time period. Assessing the difference is based on any of: data collected from the first sensor 1104, which is monitoring input resources required by the process unit 1108; data collected from the second sensor 1110, which is monitoring the one or more processes of process unit 1108; or data collected from the third sensor 1114, which is monitoring outputs associated with the process unit 1108.

Operation support system 1122 determines an issue by identifying an issue from a plurality of predetermined issues causing the deviation based on the assessed difference. The plurality of predetermined issues are stored in a corrective action database 1124. One or more control actions from the plurality of predetermined control actions are subsequently identified based on the issue causing the deviation, wherein the one or more identified control actions mitigate the difference between the predicted performance of the industrial system at the second time period and the real-time performance of the industrial system.

Operation support system 1122 is further configured to prioritize the one or more mitigating control actions based on calculating an impact of performing each mitigating control action on the industrial system. The operation recommendation 1130 comprising a representation of the impact of performing one or more mitigating control actions is then output from the monitoring module 118 to the user interface 1128. The operation recommendation 1130 enables a user of the user interface 1128 to select an operation at operation unit 1106 to initiate one or more mitigating control actions to change one or more processes of process unit 1108.

The user interface 1128 is configured to analyze the operation recommendation 1130 and subsequent operation selection at operation unit 1106, such as by performing method 500. The analysis is used to update the corrective action database 1124 and is used by cloud server 1126 to update monitoring module 1118. Optionally, cloud server 1126 is a local server and/or computing device.

Figure 12 shows an example computing system for orchestration of the organization, deployment, and/or updating of policy management rules. Specifically, Figure 12 shows a block diagram of an embodiment of a computing system according to example embodiments of the present disclosure.

Computing system 1200 can be configured to perform any of the operations disclosed herein such as, for example, any of the operations discussed with reference to method 100, 400, 500, 600, 800, 900, 1000, operation support system 200 of Figure 2, and/or performance prediction system 700 of Figure 7. Computing system includes one or more computing device(s) 1202. Computing device(s) 1202 of computing system 1200 comprise one or more processors 1204 and memory 1206. One or more processors 1204 can be any general purpose processor(s) configured to execute a set of instructions. For example, one or more processors 1204 can be one or more general-purpose processors, one or more field programmable gate array (FPGA), and/or one or more application specific integrated circuits (ASIC). In one embodiment, one or more processors 1204 include one processor. Alternatively, one or more processors 1204 include a plurality of processors that are operatively connected. One or more processors 1204 are communicatively coupled to memory 1206 via address bus 1208, control bus 1210, and data bus 1212. Memory 1206 can be a random access memory (RAM), a read only memory (ROM), a persistent storage device such as a hard drive, an erasable programmable read only memory (EPROM), and/or the like. Computing device(s) 1202 further comprise I/O interface 1214 communicatively coupled to address bus 1208, control bus 1210, and data bus 1212.

Memory 1206 can store information that can be accessed by one or more processors 1204. For instance, memory 1206 (e.g., one or more non-transitory computer-readable storage mediums, memory devices) can include computer-readable instructions (not shown) that can be executed by one or more processors 1204. The computer-readable instructions can be software written in any suitable programming language or can be implemented in hardware. Additionally, or alternatively, the computer-readable instructions can be executed in logically and/or virtually separate threads on one or more processors 1204. For example, memory 1206 can store instructions (not shown) that when executed by one or more processors 1204 cause one or more processors 1204 to perform operations such as any of the operations and functions for which computing system 1200 is configured, as described herein. In addition, or alternatively, memory 1206 can store data (not shown) that can be obtained, received, accessed, written, manipulated, created, and/or stored. The data can include, for instance, the data and/or information described herein in relation to the present disclosure. In some implementations, computing device(s) 1202 can obtain from and/or store data in one or more memory device(s) that are remote from the computing system 1200.

Computing system 1200 further comprises storage unit 1216, network interface 1218, input controller 1220, and output controller 1222. Storage unit 1216, network interface 1218, input controller 1220, and output controller 1222 are communicatively coupled to central control unit via I/O interface 1214.

Storage unit 1216 is a computer readable medium, which may be transitory or non-transitory computer readable medium, comprising one or more programs, the one or more programs comprising instructions which when executed by the one or more processors 1204 cause computing system 1200 to perform the method steps of the present disclosure. Alternatively, storage unit 1216 is a transitory computer readable medium. Storage unit 1216 can be a persistent storage device such as a hard drive, a cloud storage device, or any other appropriate storage device.

Optionally, industrial system 1100 and processing unit 1108 is directed towards any of, or a combination of, without limitation, mixers and other feed preparation devices, atomization devices, gas dispersers, drying chambers, fluid beds and other dryers, spray-freeze, pneumatic-, evaporators & crystallizers, centrifuges & separators, chillers & heat pumps, compressors, homogenizers, granulators, cyclones and/or filters, heaters, pumps, blowers, condensers, valves, cleaning in place and sanitization systems, powder handling systems, brewing systems, chillers, freezers, distillation and fermentation systems, emission control systems, farm equipment, filling, bottling and packaging systems, food processing systems, ice machines, membrane filtration systems, milking systems, liquid processing systems, pumps and valves, tablet presses, vacuum systems, bioreactor systems, perfusion and feeding systems, sterilization systems, media recovery systems, harvest systems, scaffold equipment design, interconnection ducting and/or piping and other related auxiliaries, and the associated processes, process parameters, control systems, bioprocess sensors.

Network interface 1218 can be a Wi-Fi module, a network interface card, a Bluetooth module, and/or any other suitable wired or wireless communication device. In an embodiment, network interface 1218 is configured to connect to a network such as a local area network (LAN), or a wide area network (WAN), the Internet, or an intranet.

At this point it should be noted that orchestration of the methods of the present disclosure as described above may involve the processing of input data and the generation of output data to some extent. This input data processing and output data generation is implemented in hardware or software. For example, specific electronic components are employed in a control module or similar or related circuitry for implementing the functions associated with the methods in accordance with the present disclosure as described above. Alternatively, one or more processors operating in accordance with instructions may implement the functions associated with the methods in accordance with the present disclosure as described above. If such is the case, it is within the scope of the present disclosure that such instructions are stored on one or more transitory, or non-transitory, processor readable storage media (e.g., a magnetic disk or other storage medium), or transmitted to one or more processors via one or more signals embodied in one or more carrier waves.

**Claims**

1. A computer-implemented method (100) for determining actions to improve operation of an industrial system, the method comprising:

   obtaining (102) reference data indicative of one or more states of the industrial system, wherein reference data is associated with data collected from one or more sensors of the industrial system;

determining (104) whether a deviation greater than a predetermined threshold is present within a comparison of the reference data to expected values of the reference data, wherein the predetermined threshold is associated with a process of the industrial system;

in the event that a deviation greater than the predetermined threshold is present, assessing (106) an effect of the deviation on one or more outputs of the industrial system based on a difference between a performance of the industrial system with the deviation present at a first time point and a projected performance of the industrial system at the first time point without the deviation present;

selecting (108) one or more mitigating control actions from a plurality of predetermined control actions, wherein each predetermined control actions represents a predetermined operation to change one or more processes of the industrial system, and wherein selecting comprises:

> identifying an issue, from a plurality of predetermined issues, as causing the deviation based on the assessed effect of the deviation; and
>
> identifying one or more control actions from the plurality of predetermined control actions based on the identified issue causing the deviation, wherein the one or more identified control actions are selected to reduce the effect of the deviation of the one or more outputs of the industrial system;

calculating (110) an impact of performing each mitigating control action on the one or more outputs of the industrial system; and

outputting (112) a representation of the impact of performing one or more mitigating control actions to a user interface, and enabling a user of the user interface to select an operation to initiate at least one of the one or more mitigating control actions to change one or more processes of the industrial system.

2. The method of claim 1, wherein the reference data comprises:

> data collected over a first time period from one or more sensors of the industrial system, wherein the data collected over the first time period is indicative of a historical state of the industrial system; or
>
> real-time data collected by the one or more sensors of the industrial system, wherein the real-time data is indicative of a current state of the industrial system; or
>
> a predicted state value of the industrial system, wherein the predicted state value is associated with a predicted performance of the industrial system at a second time period and is based on the data collected over the first time period, and wherein the predicted state value is indicative of a future state of the industrial system.

3. The method of claim 2, wherein determining whether the deviation is present comprises:

> evaluating the data collected over the first time period, wherein the data collected over the first time period is time-dependent; and
>
> identifying one or more trends and/or time-dependent tendencies over the first time period in the evaluated data collected over the first time period.

4. The method of any of claims 1 to 3, further comprising prioritising the one or more mitigating control actions based on the calculated impact of performing each mitigating control action.

5. The method of any of claims 1 to 4, further comprising determining whether any of the one or more mitigating control actions have been performed.

6. The method of claim 5, further comprising storing feedback data, wherein the feedback data is associated with the determination of whether any of the one or more mitigating control actions have been performed.

7. The method of claim 6, wherein the feedback data is used for: further determining whether there is a deviation present; further identify the issue causing the deviation from the plurality of predetermined issues; or further identify one or more control actions from the plurality of predetermined control actions.

8. The method of any of claims 1 to 7, further comprising:

> updating the reference data, wherein the updated reference data comprises a further predicted state value from the user interface of the industrial system;

determining whether there is a new deviation between the further predicted state value and an updated measured performance of the industrial system based on updated data collected from one or more sensors of the industrial system;

in the event that a deviation is present, calculating an impact of the new deviation; and

selecting one or more further control actions based on the new deviation impact.

9. The method of any of claims 1 to 8, further comprising generating a visual representation of the impact of the deviation by determining a relevant graphical interpretation of the impact of the deviation from a list of graphical interpretations based on mapping the data associated with the impact of the deviation to the predicted state value.

10. The method of any of claims 1 to 9, wherein determining the issue is performed using a rule-based model associated with one or more processes of the industrial system, and comprises analysing the plurality of predetermined control actions based on the rule-based model.

11. The method of any of claims 1 to 10, wherein the impact of the deviation comprises a plurality of impact values comprising any of: production measures, operational measures, environmental measures, safety measures, or efficiency measures.

12. A system comprising one or more processors and a memory storing instructions which, when executed by the one or more processors, cause the system to perform the steps of any of claims 1-11.

13. A computer readable medium having stored thereon computer executable instructions that, when executed by one or more processors, perform the steps of any of claims 1-11.

**Patentansprüche**

1. Computerimplementiertes Verfahren (100) zum Bestimmen von Maßnahmen zur Verbesserung des Betriebs eines Industriesystems, das Verfahren umfassend:

   Erhalten (102) von Referenzdaten, die einen oder mehrere Zustände des Industriesystems angeben, wobei die Referenzdaten mit Daten verknüpft sind, die von einem oder mehreren Sensoren des Industriesystems gesammelt werden;

   Bestimmen (104), ob eine Abweichung größer als ein vorbestimmter Schwellenwert innerhalb eines Vergleichs der Referenzdaten mit erwarteten Werten der Referenzdaten vorhanden ist, wobei der vorbestimmte Schwellenwert mit einem Prozess des Industriesystems verknüpft ist;

   für den Fall, dass eine Abweichung größer als der vorbestimmte Schwellenwert vorhanden ist, Bewerten (106) einer Wirkung der Abweichung auf einen oder mehrere Ausgänge des Industriesystems basierend auf einer Differenz zwischen einer Leistung des Industriesystems mit der Abweichung, die zu einem ersten Zeitpunkt vorhanden ist, und einer hochgerechneten Leistung des Industriesystems zu dem ersten Zeitpunkt ohne das die Abweichung vorhanden ist;

   Auswählen (108) einer oder mehrerer mildernder Steuerungsmaßnahmen aus einer Vielzahl von vorbestimmten Steuerungsmaßnahmen, wobei jede vorbestimmte Steuerungsmaßnahme einen vorbestimmten Betrieb zum Ändern eines oder mehrerer Prozesse des Industriesystems darstellt, und wobei das Auswählen umfasst:

   Identifizieren eines Problems aus einer Vielzahl von vorbestimmten Problemen als die Abweichung verursachend, basierend auf der bewerteten Wirkung der Abweichung; und

   Identifizieren einer oder mehrerer Steuerungsmaßnahmen aus der Vielzahl von vorbestimmten Steuerungsmaßnahmen basierend auf dem identifizierten Problem, das die Abweichung verursacht, wobei die eine oder die mehreren identifizierten Steuerungsmaßnahmen ausgewählt werden, um die Wirkung der Abweichung des einen oder der mehreren Ausgänge des Industriesystems zu reduzieren;

   Berechnen (110) einer Auswirkung des Durchführens jeder mildernden Steuerungsmaßnahme auf den einen oder die mehreren Ausgänge des Industriesystems; und

   Ausgeben (112) einer Darstellung der Auswirkung des Durchführens einer oder mehrerer mildernder Steuerungsmaßnahmen an eine Benutzerschnittstelle und Ermöglichen, dass ein Benutzer der Benutzerschnittstelle einen Betrieb auswählt, um mindestens eine der einen oder der mehreren mildernden Steuerungsmaßnahmen einzuleiten, um einen oder mehrere Prozesse des Industriesystems zu ändern.

**2.** Verfahren nach Anspruch 1, wobei die Referenzdaten umfassen:

Daten, die über einen ersten Zeitraum von einem oder mehreren Sensoren des Industriesystems gesammelt werden, wobei die über den ersten Zeitraum gesammelten Daten einen historischen Zustand des Industriesystems angeben; oder
Echtzeitdaten, die von dem einen oder den mehreren Sensoren des Industriesystems gesammelt werden, wobei die Echtzeitdaten einen aktuellen Zustand des Industriesystems angeben; oder
einen vorhergesagten Zustandswert des Industriesystems, wobei der vorhergesagte Zustandswert mit einer vorhergesagten Leistung des Industriesystems zu einem zweiten Zeitpunkt verknüpft ist und auf den über den ersten Zeitraum gesammelten Daten basiert, und wobei der vorhergesagte Zustandswert einen zukünftigen Zustand des Industriesystems angibt.

**3.** Verfahren nach Anspruch 2, wobei das Bestimmen, ob die Abweichung vorhanden ist, umfasst:

Auswerten der über den ersten Zeitraum gesammelten Daten, wobei die über den ersten Zeitraum gesammelten Daten zeitabhängig sind; und
Identifizieren eines oder mehrerer Trends und/oder einer oder mehrerer zeitabhängiger Tendenzen über den ersten Zeitraum in den ausgewerteten Daten, die über den ersten Zeitraum gesammelt werden.

**4.** Verfahren nach einem der Ansprüche 1 bis 3, weiter umfassend ein Priorisieren der einen oder der mehreren mildernden Steuerungsmaßnahmen basierend auf der berechneten Auswirkung des Durchführens jeder mildernden Steuerungsmaßnahme.

**5.** Verfahren nach einem der Ansprüche 1 bis 4, weiter umfassend ein Bestimmen, ob eine der einen oder der mehreren mildernden Steuerungsmaßnahmen durchgeführt wurde.

**6.** Verfahren nach Anspruch 5, weiter umfassend ein Speichern von Rückmeldungsdaten, wobei die Rückmeldungsdaten mit dem Bestimmen, ob eine der einen oder der mehreren mildernden Steuerungsmaßnahmen durchgeführt wurde, verknüpft sind.

**7.** Verfahren nach Anspruch 6, wobei die Rückmeldungsdaten verwendet werden, um: weiter zu bestimmen, ob eine Abweichung vorhanden ist; das Problem, das die Abweichung verursacht, weiter aus der Vielzahl von vorbestimmten Problemen zu identifizieren; oder weiter eine oder mehrere Steuerungsmaßnahmen aus der Vielzahl von vorbestimmten Steuerungsmaßnahmen zu identifizieren.

**8.** Verfahren nach einem der Ansprüche 1 bis 7, weiter umfassend:

Aktualisieren der Referenzdaten, wobei die aktualisierten Referenzdaten einen weiteren vorhergesagten Zustandswert von der Benutzerschnittstelle des Industriesystems umfassen;
Bestimmen, ob eine neue Abweichung zwischen dem weiteren vorhergesagten Zustandswert und einer aktualisierten gemessenen Leistung des Industriesystems vorliegt, basierend auf aktualisierten Daten, die von einem oder mehreren Sensoren des Industriesystems gesammelt werden;
für den Fall, dass eine Abweichung vorhanden ist, Berechnen einer Auswirkung der neuen Abweichung; und
Auswählen einer oder mehrerer weiterer Steuerungsmaßnahmen basierend auf der neuen Abweichungsauswirkung.

**9.** Verfahren nach einem der Ansprüche 1 bis 8, weiter umfassend ein Erzeugen einer visuellen Darstellung der Auswirkung der Abweichung durch Bestimmen einer relevanten grafischen Interpretation der Auswirkung der Abweichung aus einer Liste grafischer Interpretationen, basierend auf dem Abbilden der mit der Auswirkung der Abweichung verknüpften Daten auf den vorhergesagten Zustandswert.

**10.** Verfahren nach einem der Ansprüche 1 bis 9, wobei das Bestimmen des Problems unter Verwendung eines regelbasierten Modells durchgeführt wird, das mit einem oder mehreren Prozessen des Industriesystems verknüpft ist, und ein Analysieren der Vielzahl von vorbestimmten Steuerungsmaßnahmen basierend auf dem regelbasierten Modell umfasst.

**11.** Verfahren nach einem der Ansprüche 1 bis 10, wobei die Auswirkung der Abweichung eine Vielzahl von Auswirkungswerten umfasst, umfassend eines von: Produktionsmaßen, Betriebsmaßen, Umweltmaßen, Sicherheitsmaßen oder Effizienzmaßen.

**12.** System, umfassend einen oder mehrere Prozessoren und einen Speicher, der Anweisungen speichert, die, wenn sie durch den einen oder die mehreren Prozessoren ausgeführt werden, das System dazu veranlassen, die Schritte nach einem der Ansprüche 1-11 durchzuführen.

**13.** Computerlesbares Medium, auf dem computerausführbare Anweisungen gespeichert sind, die, wenn sie durch den einen oder die mehreren Prozessoren ausgeführt werden, die Schritte nach einem der Ansprüche 1-11 durchführen.

**Revendications**

**1.** Procédé (100) mis en œuvre par ordinateur pour déterminer des actions visant à améliorer le fonctionnement d'un système industriel, le procédé comprenant :

l'obtention (102) de données de référence indicatives d'un ou plusieurs états du système industriel, dans lequel des données de référence sont associées à des données collectées à partir d'un ou plusieurs capteurs du système industriel ;

la détermination (104) de la présence ou non d'un écart supérieur à un seuil prédéterminé au sein d'une comparaison des données de référence à des valeurs attendues des données de référence, dans lequel le seuil prédéterminé est associé à un processus du système industriel ;

dans le cas où un écart supérieur au seuil prédéterminé est présent, l'évaluation (106) d'un effet de l'écart sur une ou plusieurs sorties du système industriel sur la base d'une différence entre une performance du système industriel avec l'écart présent à un premier point temporel et une performance projetée du système industriel au premier point temporel sans l'écart présent ;

la sélection (108) d'une ou plusieurs actions de commande d'atténuation parmi une pluralité d'actions de commande prédéterminées, dans lequel chaque action de commande prédéterminée représente une opération prédéterminée pour modifier un ou plusieurs processus du système industriel, et dans lequel la sélection comprend :

l'identification d'un problème, parmi une pluralité de problèmes prédéterminés, qui provoque l'écart sur la base de l'effet évalué de l'écart ; et

l'identification d'une ou plusieurs actions de commande parmi la pluralité d'actions de commande prédéterminées sur la base du problème identifié qui provoque l'écart, dans lequel les une ou plusieurs actions de commande identifiées sont sélectionnées pour réduire l'effet de l'écart des une ou plusieurs sorties du système industriel ;

le calcul (110) d'un impact de la réalisation de chaque action de commande d'atténuation sur les une ou plusieurs sorties du système industriel ; et

la sortie (112) d'une représentation de l'impact de la réalisation d'une ou plusieurs actions de commande d'atténuation sur une interface utilisateur, et la permission à un utilisateur de l'interface utilisateur de sélectionner une opération pour initier au moins l'une des une ou plusieurs actions de commande d'atténuation pour modifier un ou plusieurs processus du système industriel.

**2.** Procédé selon la revendication 1, dans lequel les données de référence comprennent :

des données collectées au cours d'une première période temporelle à partir d'un ou plusieurs capteurs du système industriel, dans lequel les données collectées au cours de la première période temporelle sont indicatives d'un état historique du système industriel ; ou

des données en temps réel collectées par le ou les capteurs du système industriel, dans lequel les données en temps réel sont indicatives d'un état actuel du système industriel ; ou

une valeur d'état prédite du système industriel, dans lequel la valeur d'état prédite est associée à une performance prédite du système industriel à une seconde période temporelle et est basée sur les données collectées sur la première période temporelle, et dans lequel la valeur d'état prédite est indicative d'un état futur du système industriel.

**3.** Procédé selon la revendication 2, dans lequel la détermination de la présence ou non de l'écart comprend :

l'évaluation des données collectées au cours de la première période temporelle, dans lequel les données collectées au cours de la première période temporelle sont dépendantes du temps ; et

l'identification d'une ou plusieurs tendances et/ou tendances dépendantes du temps au cours de la première période dans les données évaluées collectées au cours de la première période.

4. Procédé selon l'une quelconque des revendications 1 à 3, comprenant en outre la priorisation des une ou plusieurs actions de commande d'atténuation sur la base de l'impact calculé de la réalisation de chaque action de commande d'atténuation.

5. Procédé selon l'une quelconque des revendications 1 à 4, comprenant en outre la détermination si l'une quelconque de la ou des actions de commande d'atténuation a été réalisée ou non.

6. Procédé selon la revendication 5, comprenant en outre le stockage de données de rétroaction, dans lequel les données de rétroaction sont associées à la détermination si l'une quelconque de la ou des actions de commande d'atténuation a été réalisée ou non.

7. Procédé selon la revendication 6, dans lequel les données de rétroaction sont utilisées pour : déterminer en outre s'il existe ou non un écart ; identifier en outre le problème provoquant l'écart parmi la pluralité de problèmes prédéterminés ; ou identifier en outre une ou plusieurs actions de commande parmi la pluralité d'actions de commande prédéterminées.

8. Procédé selon l'une quelconque des revendications 1 à 7, comprenant en outre :

la mise à jour des données de référence, dans lequel les données de référence mises à jour comprennent une valeur d'état prédite supplémentaire à partir de l'interface utilisateur du système industriel ;

la détermination s'il existe ou non un nouvel écart entre la valeur d'état prédite supplémentaire et une performance mesurée mise à jour du système industriel sur la base de données mises à jour collectées à partir d'un ou plusieurs capteurs du système industriel ;

en cas de présence d'un écart, le calcul d'un impact du nouvel écart ; et

la sélection d'une ou plusieurs actions de commande supplémentaires sur la base de l'impact du nouvel écart.

9. Procédé selon l'une quelconque des revendications 1 à 8, comprenant en outre la génération d'une représentation visuelle de l'impact de l'écart en déterminant une interprétation graphique pertinente de l'impact de l'écart parmi une liste d'interprétations graphiques sur la base du mappage des données associées à l'impact de l'écart à la valeur d'état prédite.

10. Procédé selon l'une quelconque des revendications 1 à 9, dans lequel la détermination du problème est réalisée en utilisant un modèle basé sur des règles associé à un ou plusieurs processus du système industriel, et comprend l'analyse de la pluralité d'actions de commande prédéterminées sur la base du modèle basé sur des règles.

11. Procédé selon l'une quelconque des revendications 1 à 10, dans lequel l'impact de l'écart comprend une pluralité de valeurs d'impact comprenant l'une quelconque parmi : des mesures de production, des mesures opérationnelles, des mesures environnementales, des mesures de sécurité ou des mesures de rendement.

12. Système comprenant un ou plusieurs processeurs et une mémoire stockant des instructions qui, lorsqu'elles sont exécutées par le ou les processeurs, amènent le système à réaliser les étapes selon l'une quelconque des revendications 1 à 11.

13. Support lisible par ordinateur sur lequel sont stockées des instructions exécutables par ordinateur qui, lorsqu'elles sont exécutées par un ou plusieurs processeurs, réalisent les étapes selon l'une quelconque des revendications 1 à 11.

100

```
┌─────────────────────────────────────────────────┐
│                     (102)                       │
│            OBTAINING REFERENCE DATA             │
└─────────────────────────────────────────────────┘
                        │
                        ▼
┌─────────────────────────────────────────────────┐
│                     (104)                       │
│        DETERMINING WHETHER A DEVIATION IS       │
│        PRESENT WITHIN THE REFERENCE DATA        │
└─────────────────────────────────────────────────┘
                        │
                        ▼
┌─────────────────────────────────────────────────┐
│                     (106)                       │
│       ASSESSING THE EFFECT OF THE DEVIATION ON  │
│             THE INDUSTRIAL SYSTEM               │
└─────────────────────────────────────────────────┘
                        │
                        ▼
┌─────────────────────────────────────────────────┐
│                     (108)                       │
│        SELECTING ONE OR MORE MITIGATING         │
│      CONTROL ACTIONS FROM A PLURALITY OF        │
│       PREDETERMINED CONTROL ACTIONS             │
└─────────────────────────────────────────────────┘
                        │
                        ▼
┌─────────────────────────────────────────────────┐
│                     (110)                       │
│       CALCULATING AN IMPACT OF PERFORMING       │
│         EACH MITIGATING CONTROL ACTION          │
└─────────────────────────────────────────────────┘
                        │
                        ▼
┌─────────────────────────────────────────────────┐
│                     (112)                       │
│       OUTPUTTING A REPRESENTATION OF THE        │
│                   IMPACT                        │
└─────────────────────────────────────────────────┘
```

FIGURE 1

FIGURE 2

300

302

# FIRST FOCUS INDICATOR

304

(306) ASSESSED EFFECT OF THE DEVIATION

(308)

(310)

(312)

FIGURE 3

400

```
┌─────────────────────────────────────────┐
│                  (402)                   │
│      SELECTING ONE OR MORE MITIGATING    │
│     CONTROL ACTIONS FROM A PLURALITY OF  │
│       PREDETERMINED CONTROL ACTIONS      │
└─────────────────────────────────────────┘
                     │
                     ▼
┌─────────────────────────────────────────┐
│                  (404)                   │
│     IDENTIFYING AN ISSUE FROM A PLURALITY OF │
│       PREDETERMINED ISSUES CAUSING A     │
│                DEVIATION                 │
└─────────────────────────────────────────┘
                     │
                     ▼
┌─────────────────────────────────────────┐
│                  (406)                   │
│         IDENTIFYING ONE OR MORE CONTROL  │
│     ACTIONS BASED ON THE IDENTIFIED ISSUE │
└─────────────────────────────────────────┘
                     │
                     ▼
┌─────────────────────────────────────────┐
│                  (408)                   │
│     CALCULATING AN IMPACT OF EACH MITIGATING │
│   CONTROL ACTION ON THE INDUSTRIAL SYSTEM │
└─────────────────────────────────────────┘
                     │
                     ▼
┌─────────────────────────────────────────┐
│                  (410)                   │
│     PRIORITISING THE ONE OR MORE MITIGATING │
│              CONTROL ACTIONS             │
└─────────────────────────────────────────┘
```

FIGURE 4

500

(502)
DETERMINING WHETHER A MITIGATING
CONTROL ACTION IS PERFORMED

(504)
STORING FEEDBACK DATA ASSOCIATED WITH
THE DETERMINATION

(506)
USING THE FEEDBACK DATA TO FURTHER
DETERMINE WHETHER THERE IS A DEVIATION

(508)
USING THE FEEDBACK DATA TO FURTHER
IDENTIFY THE ISSUE

(510)
USING THE FEEDBACK DATA TO FURTHER
IDENTIFY A CONTROL ACTION

(512)
USING THE FEEDBACK DATA TO ADJUST A
DEVIATION CLASSIFIER TO IMPROVE
ACCURACY OF DEVIATION DETERMINATION

FIGURE 5

600

```
┌─────────────────────────────────────────┐
│                  (602)                   │
│      OBTAINING A FIRST STATE VALUE FROM A │
│        TRAINED MACHINE LEARNING MODEL     │
└─────────────────────────────────────────┘
                    │
                    ▼
┌─────────────────────────────────────────┐
│                  (604)                   │
│    OBTAINING REAL-TIME SYSTEM INFORMATION │
│    COMPRISING DATA COLLECTED FROM A SET   │
│     OF SENSORS OF THE INDUSTRIAL SYSTEM   │
└─────────────────────────────────────────┘
                    │
                    ▼
┌─────────────────────────────────────────┐
│                  (606)                   │
│    DETERMINING A SECOND STATE VALUE USING │
│     A PREDICTION MODEL USING THE FIRST STATE │
│      VALUE AND THE REAL-TIME SYSTEM       │
│                INFORMATION                │
└─────────────────────────────────────────┘
                    │
                    ▼
┌─────────────────────────────────────────┐
│                  (608)                   │
│    UPDATING THE TRAINED MACHINE LEARNING  │
│                  MODEL                    │
└─────────────────────────────────────────┘
```

FIGURE 6

FIGURE 7

800

```
┌─────────────────────────────────────────┐
│                 (802)                    │
│   CALCULATING A THIRD STATE VALUE USING  │
│   DATA COLLECTED FROM A SET OF SENSORS   │
│        OF THE INDUSTRIAL SYSTEM          │
└─────────────────────────────────────────┘
                     │
                     ▼
┌─────────────────────────────────────────┐
│                 (804)                    │
│     ADJUSTING A TRAINED MACHINE LEARNING │
│     MODEL USING ON THE THIRD STATE VALUE │
└─────────────────────────────────────────┘
                     │
                     ▼
┌─────────────────────────────────────────┐
│                 (806)                    │
│   OBTAINING A FOURTH STATE VALUE FROM THE│
│      TRAINED MACHINE LEARNING MODEL      │
└─────────────────────────────────────────┘
                     │
                     ▼
┌─────────────────────────────────────────┐
│                 (808)                    │
│    DETERMINING A FIFTH STATE VALUE USING │
│    THE THIRD STATE VALUE AND THE FOURTH  │
│              STATE VALUE                 │
└─────────────────────────────────────────┘
                     │
                     ▼
┌─────────────────────────────────────────┐
│                 (810)                    │
│   UPDATING THE TRAINED MACHINE LEARNING  │
│                MODEL                     │
└─────────────────────────────────────────┘
```

FIGURE 8

900

**(902)**
ASSIGNING A FIRST QUALITY LABEL AND
A SECOND QUALITY LABEL TO A SECOND
STATE VALUE AND A THIRD STATE VALUE

**(904)**
FILTERING A PLURALITY OF THIRD STATE
VALUES

**(906)**
DOES THE FILTERED
PLURALITY OF
THIRD STATE
VALUES MEET A
PREDEFINED
CRITERIA?

NO

YES

**(908)**
CANCELLING UPDATING THE TRAINED
MACHINE LEARNING MODEL

**(910)**
CONTINUE UPDATING THE TRAINED
MACHINE LEARNING MODEL

**(912)**
OUTPUTTING THE SECOND STATE VALUE
TO A USER INTERFACE

**FIGURE 9**

1000

```
┌─────────────────────────────────────┐
│               (1002)                 │
│   OBTAINING A FIRST STATE VALUE FROM A│
│     TRAINED MACHINE LEARNING MODEL   │
└─────────────────────────────────────┘
                    │
                    ▼
┌─────────────────────────────────────┐
│               (1004)                 │
│ OBTAINING REAL-TIME SYSTEM INFORMATION│
│  COMPRISING DATA COLLECTED BY A SET OF│
│    SENSORS OF THE INDUSTRIAL SYSTEM  │
└─────────────────────────────────────┘
                    │
                    ▼
┌─────────────────────────────────────┐
│               (1006)                 │
│ DETERMINING A SECOND STATE VALUE USING│
│         A PREDICTING MODEL           │
└─────────────────────────────────────┘
                    │
                    ▼
┌─────────────────────────────────────┐
│               (1008)                 │
│   DETERMINING WHETHER A DEVIATION IS │
│  PRESENT USING THE SECOND STATE VALUE│
└─────────────────────────────────────┘
                    │
                    ▼
┌─────────────────────────────────────┐
│               (1010)                 │
│   ASSESSING THE EFFECT OF THE DEVIATION│
└─────────────────────────────────────┘
                    │
                    ▼
                  ( A )
```

FIGURE 10A

1000

A

(1012)
SELECTING ONE OR MORE MITIGATING
CONTROL ACTIONS

(1014)
ASSESSING A DIFFERENCE IN
PERFORMANCE OF THE INDUSTRIAL
SYSTEM

(1016)
DETERMINING AN ISSUE CASING THE
DEVIATION BASED ON THE
ASSESSMENT

(1018)
IDENTIFYING ONE OR MORE CONTROL
ACTIONS BASED ON THE ISSUE

(1020)
PRIORITISING THE ONE OR MORE MITIGATING
CONTROL ACTIONS

(1022)
OUTPUTTING A VISUAL REPRESENTATION

FIGURE 10B

FIGURE 11

FIGURE 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020150634 A1
- US 2020126167 A1

**Non-patent literature cited in the description**

- Brewery utilities (manual of good practice). EBC Technology and Engineering Forum, 1997
- Clean-in Place for Biopharmaceutical Processes. Drugs and the Pharmaceutical Sciences, 2007, vol. 173, 302-313
- **J PISECKY**. Handbook of Milk Powder Manufacture. GEA Process Engineering A/S, 2012, 222